(19) Europäisches Patentamt / European Patent Office / Office européen des brevets

(11) **EP 4 670 497 A1**

(12) **EUROPEAN PATENT APPLICATION**

(43) Date of publication:
**31.12.2025 Bulletin 2026/01**

(21) Application number: **24190398.8**

(22) Date of filing: **23.07.2024**

(51) International Patent Classification (IPC):
**A01K 5/00** (2006.01)    **A01K 29/00** (2006.01)
**A01K 5/02** (2006.01)

(52) Cooperative Patent Classification (CPC):
**A01K 5/00; A01K 29/00;** A01K 5/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.06.2024 US 202418751665**

(71) Applicant: **Afimilk Agricultural Cooperative Ltd.**
**1514800 Kibbutz Afikim (IL)**

(72) Inventors:
• **KAPLAN SHABTAI, Veronica**
  **1513500 Beit Zera (IL)**
• **YAIR, Roni Shlomo**
  **1524100 Kfar Tavor (IL)**

(74) Representative: **HGF**
**HGF Limited**
**4th Floor, 1 City Square**
**Leeds LS1 2AL (GB)**

(54) **SYSTEM AND METHOD FOR DAIRY HERD MANAGEMENT BASED ON INDIVIDUAL FEED EFFICIENCY**

(57)    A system and method for classifying individual herd members based at least on the feed efficiency of the individual herd members, and for further removing selected individual hard members based at least on the income over feed of the individual herd members, wherein the system includes at least a dry matter intake module, milk production module, a central processing unit, a processor in communication with a memory module, having stored thereon a program code executable by the processor.

400

| Obtaining dry matter intake (DMI) of individual herd members over a pre-determined period of time | 402 |

| Obtaining milk production (MP) of the individual herd members over the pre-determined period of time | 404 |

| Calculating feed efficiency (FE) of the individual herd members based on the MP and DMI | 406 |

| Classifying the individual herd members according to the FE | 408 |

FIG. 4

**Description**

**TECHNICAL FIELD**

The present disclosure relates generally to systems and methods for herd management, including classifying individual herd members, based on feed efficiency and timing the removal of selected individual herd members.

**BACKGROUND**

Known methods for cattle herd management, such as herds of cows, are based on yield, i.e., the amount of milk produced by each member of the herd. Such methods are limited, since they relate only to the milk yield, but not to the expense of each member of the herd, e.g., the amount of food consumed by each member. Any method for herd management based only on yield, and not a combination of yield and expenses, will inevitably provide less than optimal results.

Accordingly, there is a need in the art for a system and method for herd management that will take both milk yield and expenses, such as food consumption, into consideration.

**SUMMARY**

Embodiments of the invention are directed to a system for classifying an individual herd member, wherein the system comprises:

a dry matter intake (DMI) module configured to obtain the DMI or DMI-related data of the individual herd member, over a pre-determined period of time;
a milk production (MP) module, configured to obtain the MP or MP-related data of the individual herd member, over the pre-determined period of time;
a central processing unit (CPU) comprising a processor in communication with a memory module, the memory module having stored thereon a program code, the program code executable by the processor to:

obtain the DMI from the DMI module, or obtain the DMI-related data from the DMI module and to further obtain the DMI from the DMI-related data, over the pre-determined period of time;
obtain the MP from the MP module, or obtain the MP-related data from the MP module and to further obtain the MP from the MP-related data, over the pre-determined period of time;
calculate the feed efficiency (FE) of the individual herd member over the pre-determined period of time, based on the DMI, over the predetermined time period, and the MP, over the pre-determined time period; and
classify the individual herd member according to the FE.

Further embodiments of the invention are directed to a system for classifying an individual herd member, said system comprising:

a dry matter intake (DMI) module configured to obtain the DMI or DMI-related data of the individual herd member, over a first pre-determined period of time;
a milk production (MP) module, configured to obtain the MP or MP-related data of the individual herd member, over the first pre-determined period of time;
a central processing unit (CPU) comprising a processor in communication with a memory module, the memory module having stored thereon a program code, the program code executable by the processor to:

obtain the DMI from the DMI module, or obtain the DMI-related data from the DMI module and to further obtain the DMI from the DMI-related data, over the first pre-determined period of time;
obtain the MP from the MP module, or obtain the MP-related data from the MP module and to further obtain the MP from the MP-related data, over the first pre-determined period of time;
calculate the feed efficiency (FE) of the individual herd member over the first pre-determined period of time, based on the DMI, over the first predetermined time period, and the MP, over the pre-determined time period; and
classify the individual herd member according to the FE.

According to some embodiments, if the individual herd member is classified to be removed from the herd, or group within the herd or group within the herd,

the DMI module is further configured to obtain the DMI or DMI-related data of the individual herd member, over a second pre-determined period of time;

the MP module is further configured to obtain the MP or MP-related data of the individual herd member, over the second pre-determined period of time; and

the program code is further executable by the processor to:

obtain the DMI from the DMI module, or obtain the DMI-related data from the DMI module and to further obtain the DMI from the DMI-related data, over the second pre-determined period of time;

obtain the MP from the MP module, or obtain the MP-related data from the MP module and to further obtain the MP from the MP-related data, over the second pre-determined period of time;

receive monetary data;

calculate an NIMP or an IoF of the individual herd member, based on the monetary data, the DMI over the second pre-determined time period, and the MP over the second predetermined time period; and

indicate a time for removal of the individual herd member from the herd, or group within the herd, wherein the time indicated is a time at which the NIMP is lower than a pre-determined NIMP value or a time at which the IoF is lower than a pre-determined IoF value.

According to some embodiments, the DMI module comprises:

a sensor comprising an accelerometer,

wherein the sensor is positioned on, or in the vicinity, of the individual herd member; and

wherein the sensor is configured to collect at least one type of behavioral data of the individual herd member and is further configured to transmit signals related to the at least one type of behavioral data to the CPU.

According to some embodiments, the at least one type of behavioral data includes head movements, and wherein the sensor is positioned on, or in the vicinity, of a head of the individual herd member.

According to some embodiments, the sensor is positioned in, or on, a collar or ear tag of the individual herd member.

According to some embodiments, the FE is calculated according to the following formula:

$$FE = MP/DMI.$$

According to some embodiments, the program code is further executable by the processor to classify the individual herd member according to the MP.

According to some embodiments, the CPU is configured to receive monetary data, and wherein program code is further executable by the processor to classify the individual herd member according to a net income from milk production (NIMP) or an income over feed (IoF) of the individual herd member, wherein the NIMP or IoF is based on the monetary data, the DMI and the MP.

According to some embodiments, the monetary data includes at least the price of milk and the cost of feed, and wherein the IoF is calculated according to the following formula:

$$IoF = MP*(price\ of\ milk) - DMI*(cost\ of\ feed)$$

and wherein the NIMP is calculated according to the following formula:

$$NIMP = IoF - [additional\ cost\ parameters].$$

According to some embodiments, the program code is further enabled by the processor to classify the individual herd member according to the NIMP or the IoF.

According to some embodiments, the pre-determined period time is from about 5, about 6, about 7, about 8, about 9, about 10, about 11, about 12, about 13, about 14, or about 15 days from calving to about 50, about 51, about 52, about 53, about 54, about 55, about 56, about 57, about 58, about 59, about 60, about 61, about 62 days from calving, according to the calving day of each individual herd member.

Further embodiments of the invention are directed to a system for classifying an individual herd member and for further indicating a time at which the individual herd member is to be removed from a herd, or group within the herd, wherein the system comprises:

a dry matter intake (DMI) module configured to obtain the DMI or DMI-related data of the individual herd member, over a first pre-determined period of time;

a milk production (MP) module, configured to obtain the MP or MP-related data of the individual herd member, over the first pre-determined period of time;

a central processing unit (CPU) comprising a processor in communication with a memory module, the memory module having stored thereon a program code, the program code executable by the processor to:

obtain the DMI from the DMI module, or obtain the DMI-related data from the DMI module and to further obtain the DMI from the DMI-related data, over the first pre-determined period of time;

obtain the MP from the MP module, or obtain the MP-related data from the MP module and to further obtain the MP from the MP-related data, over the first pre-determined period of time;

calculate the feed efficiency (FE) of the individual herd member over the first pre-determined period of time, based on the DMI over the first pre-determined time period and the MP over the first pre-determined time period;

classify the individual herd member according to the FE; and

wherein if the individual herd member is classified to be removed from the herd, or group within the herd or group within the herd,

the DMI module is further configured to obtain the DMI or DMI-related data of the individual herd member, over a second pre-determined period of time;

the MP module is further configured to obtain the MP or MP-related data of the individual herd member, over the second pre-determined period of time; and

the program code is further executable by the processor to:

obtain the DMI from the DMI module, or obtain the DMI-related data from the DMI module and to further obtain the DMI from the DMI-related data, over the second pre-determined period of time;

obtain the MP from the MP module, or obtain the MP-related data from the MP module and to further obtain the MP from the MP-related data, over the second pre-determined period of time;

receive monetary data;

calculate an NIMP or an IoF of the individual herd member, based on the monetary data, the DMI over the second pre-determined time period, and the MP over the second predetermined time period; and

indicate a time for removal of the individual herd member from the herd, or group within the herd, wherein the time indicated is a time at which the NIMP is lower than a pre-determined NIMP value or a time at which the IoF is lower than a pre-determined IoF value.

According to some embodiments, the DMI module comprises:

a sensor comprising an accelerometer,

wherein the sensor is positioned on, or in the vicinity, of the individual herd member; and

wherein the sensor is configured to collect at least one type of behavioral data of the individual herd member and is further configured to transmit signals related to the at least one type of behavioral data to the CPU.

According to some embodiments, the at least one type of behavioral data includes head movements, and wherein the sensor is positioned on, or in the vicinity, of a head of the individual herd member.

According to some embodiments, the sensor is positioned in, or on, a collar or ear tag of the individual herd member.

According to some embodiments, the FE is calculated according to the following formula:

$$FE = MP/DMI.$$

According to some embodiments, the program code is further executable by the processor to classify the individual herd member according to the MP.

According to some embodiments, the CPU is configured to receive monetary data, and wherein program code is further executable by the processor to classify the individual herd member according to a net income from milk production (NIMP) or an income over feed (IoF) of the individual herd member, wherein the NIMP or the IoF is based on the monetary data, the DMI and the MP.

According to some embodiments, the monetary data includes at least the price of milk and the cost of feed, wherein the IoF is calculated according to the following formula:

$$\text{IoF} = \text{MP*(price of milk)} - \text{DMI*(cost of feed);}$$

and wherein the NIMP is calculated according to the following formula:

$$\text{NIMP} = \text{IoF} - [\text{additional cost parameters}].$$

According to some embodiments, the program code is further enabled by the processor to classify the individual herd member according to the NIMP or the IoF.

According to some embodiments, the first pre-determined period time is from about 5, about 6, about 7, about 8, about 9, about 10, about 11, about 12, about 13, about 14, or about 15 days from calving to about 50, about 51, about 52, about 53, about 54, about 55, about 56, about 57, about 58, about 59, about 60, about 61, about 62 days from calving, according to the calving day of each individual herd member.

According to some embodiments, the second pre-determined period of time is about one day, about two days, about three days, about four days, about five days, about six days, about a week, about eight days, about nine days, about ten days, about 11 days, about 12 days, about 13 days, about two weeks, about 15 days, about 16 days, about 17 days, about 18 days, about 19 days, about 20 days, or about 3 weeks.

Further embodiments of the invention are directed to a method for classifying an individual herd member, wherein the method comprises:

    obtaining a dry matter intake (DMI) of the individual herd member over a pre-determined period of time;

    obtaining a milk production (MP) of the individual herd member over the pre-determined period of time;

    calculating the feed efficiency (FE) of the individual herd member over the pre-determined period of time, based on the DMI, over the pre-determined period of time, and the MP, over the pre-determined period of time; and

    classifying the individual herd member according to the FE.

Further embodiments of the invention are directed to a method for classifying an individual herd member, said method comprising:

    obtaining a dry matter intake (DMI) of the individual herd member over a first pre-determined period of time;

    obtaining a milk production (MP) of the individual herd member over the first pre-determined period of time;

    calculating the feed efficiency (FE) of the individual herd member over the first pre-determined period of time, based on the DMI, over the first pre-determined period of time, and the MP, over the first pre-determined period of time; and

    classifying the individual herd member according to the FE.

According to some embodiments, if the individual herd member is classified to be removed from the herd, or group within the herd, the method may further comprise:

    selecting the individual herd member to be removed from the herd, or group within the herd;

    obtaining a dry matter intake (DMI) of the individual herd member over a second pre-determined period of time;

    obtaining a milk production (MP) of the individual herd member over the second pre-determined period of time;

    receiving monetary data;

    calculating an NIMP or an IoF of the individual herd member, based on the monetary data, the DMI, over the second pre-determined period of time, and the MP over the second pre-determined period of time; and

    removing the individual herd member from the herd, or group within the herd, at a time when the NIMP is lower than a pre-determined NIMP value or at a time when the IoF is lower than a pre-determined IoF value.

According to some embodiments, the DMI is obtained based on at least one type of behavioral data of the individual herd member that is collected by a sensor comprising an accelerometer, wherein the sensor is positioned on, or in the vicinity, of the individual herd member.

According to some embodiments, the at least one type of behavioral data includes head movements, and wherein the sensor is positioned on, or in the vicinity, of a head of the individual herd member.

According to some embodiments, the sensor is positioned in, or on, a collar or ear tag of the individual herd member.

According to some embodiments, the method further comprises classifying the individual herd member according to the MP over the pre-determined period of time, wherein the classifying according to the MP is performed before, at the same time, or after classifying according to the FE.

According to some embodiments, the method further comprises receiving monetary data.

According to some embodiments, the monetary data includes at least the price of milk and the cost of feed, and wherein the IoF is calculated according to the following formula:

$$IoF = MP*(price\ of\ milk) - DMI*(cost\ of\ feed);$$

and wherein the NIMP is calculated according to the following formula:

$$NIMP = IoF - [additional\ cost\ parameters].$$

According to some embodiments, the method further comprises classifying the individual herd member according to the NIMP or the IoF, wherein the classifying according to the NIMP or the IoF is performed before, at the same time, or after classifying according to the FE and/or the MP, if the individual herd member is further classified according to the MP.

According to some embodiments, the pre-determined period time is from about 5, about 6, about 7, about 8, about 9, about 10, about 11, about 12, about 13, about 14, or about 15 days from calving to about 50, about 51, about 52, about 53, about 54, about 55, about 56, about 57, about 58, about 59, about 60, about 61, about 62 days from calving, according to the calving day of each individual herd member.

Further embodiments of the invention are directed to a method for classifying an individual herd member, wherein the method comprises:

obtaining a dry matter intake (DMI) of the individual herd member over a first pre-determined period of time;

obtaining a milk production (MP) of the individual herd member over the first pre-determined period of time,;

calculating the feed efficiency (FE) of the individual herd member over the first pre-determined period of time, based on the DMI, over the first predetermined period of time, and the MP, over the first pre-determined period of time;

classifying the individual herd member according to the FE;

wherein, if the individual herd member is classified to be removed from the herd, or group within the herd, the method further comprises;

selecting the individual herd member to be removed from the herd, or group within the herd;

obtaining a dry matter intake (DMI) of the individual herd member over a second pre-determined period of time;

obtaining a milk production (MP) of the individual herd member over the second pre-determined period of time;

receiving monetary data;

calculating an NIMP or an IoF of the individual herd member, based on the monetary data, the DMI, over the second pre-determined period of time, and the MP over the second pre-determined period of time; and

removing the individual herd member from the herd, or group within the herd, at a time when the NIMP is lower than a pre-determined NIMP value or at a time when the IoF is lower than a pre-determined IoF value.

According to some embodiments, the DMI is obtained based on at least one type of behavioral data of the individual herd member that is collected by a sensor comprising an accelerometer, wherein the sensor is positioned on, or in the vicinity, of the individual herd member.

According to some embodiments, the at least one type of behavioral data includes head movements, and wherein the sensor is positioned on, or in the vicinity, of a head of the individual herd member.

According to some embodiments, the sensor is positioned in, or on, a collar or ear tag of the individual herd member.

According to some embodiments, the method further comprises classifying the individual herd member according to the MP over the first pre-determined time period, wherein the classifying according to the MP is performed before, at the same time, or after classifying according to the FE.

According to some embodiments, the method further comprises receiving monetary data.

According to some embodiments, the monetary data includes at least the price of milk and the cost of feed, and wherein the IoF is calculated according to the following formula:

$$IoF = MP*(price\ of\ milk) - DMI*(cost\ of\ feed);$$

and wherein the NIMP is calculated according to the following formula:

$$NIMP = IoF - [additional\ cost\ parameters].$$

According to some embodiments, the method further comprises classifying the individual herd member according to the NIMP or the IoF, wherein the classifying according to the NIMP or the IoF is performed before, at the same time, or after classifying according to the FE and/or the MP over the first pre-determined time period, if the individual herd member is further classified according to the MP.

According to some embodiments, the first pre-determined period time is from about 5, about 6, about 7, about 8, about 9, about 10, about 11, about 12, about 13, about 14, or about 15 days from calving to about 50, about 51, about 52, about 53, about 54, about 55, about 56, about 57, about 58, about 59, about 60, about 61, about 62 days from calving, according to the calving day of each individual herd member.

According to some embodiments, the second pre-determined period of time is about one day, about two days, about three days, about four days, about five days, about six days, about a week, about eight days, about nine days, about ten days, about 11 days, about 12 days, about 13 days, about two weeks, about 15 days, about 16 days, about 17 days, about 18 days, about 19 days, about 20 days, or about 3 weeks.

Some embodiments of the invention are directed to a method for timing the removal of at least one individual herd member from a herd, or group within the herd, wherein the method comprises:

selecting at least one individual herd member that is to be removed from the herd, or the group within the herd;

obtaining a dry matter intake (DMI) of the individual herd member over a pre-determined period of time;

obtaining a milk production (MP) of the individual herd member over the pre-determined period of time;

receiving monetary data;

calculating the net income from milk production (NIMP) or the income over feed (IoF) for the individual herd member over the pre-determined period of time, based on the DMI, MP, and the monetary data; and

removing the individual herd member from the herd, or group within the herd, at a time when the NIMP becomes lower than a pre-determined NIMP value or at a time when the IoF becomes lower than a pre-determined IoF value.

According to some embodiments, the DMI is obtained based on at least one type of behavioral data of the individual herd member that is collected by a sensor comprising an accelerometer, wherein the sensor is positioned on, or in the vicinity, of the individual herd member.

According to some embodiments, the at least one type of behavioral data includes head movements, and wherein the sensor is positioned on, or in the vicinity, of a head of the individual herd member.

According to some embodiments, the sensor is positioned in, or on, a collar or ear tag of the individual herd member.

According to some embodiments, the pre-determined period of time is about one day, about two days, about three days, about four days, about five days, about six days, about a week, about eight days, about nine days, about ten days, about 11 days, about 12 days, about 13 days, about two weeks, about 15 days, about 16 days, about 17 days, about 18 days, about 19 days, about 20 days, or about 3 weeks.

According to some embodiments, the FE is calculated according to the following formula:

$$FE = MP/DMI.$$

According to some embodiments, the monetary data is received from an external source.

According to some embodiments, the monetary data includes at least the price of milk and the cost of feed.

According to some embodiments, the IoF is calculated according to the following formula:

$$IoF = MP*(price\ of\ milk) - DMI*(cost\ of\ feed).$$

According to some embodiments, the NIMP is calculated according to the following formula:

$$NIMP = IoF - [additional\ cost\ parameters].$$

Certain embodiments of the present disclosure may include some, all, or none of the above advantages. One or more other technical advantages may be readily apparent to those skilled in the art from the figures, descriptions, and claims included herein. Moreover, while specific advantages have been enumerated above, various embodiments may include all, some, or none of the enumerated advantages.

Unless otherwise defined, all technical and scientific terms used herein have the same meaning as commonly understood by one of ordinary skill in the art to which this disclosure pertains. In case of conflict, the patent specification, including definitions, governs. As used herein, the indefinite articles "a" and "an" mean "at least one" or "one or more" unless the context clearly dictates otherwise.

## BRIEF DESCRIPTION OF THE FIGURES

Some embodiments of the disclosure are described herein with reference to the accompanying figures. The description, together with the figures, makes apparent to a person having ordinary skill in the art how some embodiments may be practiced. The figures are for the purpose of illustrative description and no attempt is made to show structural details of an embodiment in more detail than is necessary for a fundamental understanding of the disclosure. For the sake of clarity, some objects depicted in the figures are not drawn to scale. Moreover, two different objects in the same figure may be drawn to different scales. In particular, the scale of some objects may be greatly exaggerated as compared to other objects in the same figure.

In block diagrams and flowcharts, optional elements/components and optional stages may be included within dashed boxes.

In the figures:

**FIG. 1** is a is a block diagram depicting a system for classifying individual herd members according to illustrative embodiments of the present invention;

**FIG. 2** is a is a block diagram depicting a system for classifying individual herd members according to illustrative embodiments of the present invention, wherein the system includes a sensor comprising an accelerator;

**FIG. 3** is a is a block diagram depicting a system for classifying individual herd members according to illustrative embodiments of the present invention, wherein the system includes a collar or ear-tag that has in (or on) it a sensor comprising an accelerator;

**FIG. 4** is a flowchart of functional steps in a method for classifying individual herd members according to illustrative embodiments of the present invention, wherein the individual herd members are classified according to the feed efficiency (FE);

**FIG. 5** is a flowchart of functional steps in a method for classifying individual herd members according to illustrative embodiments of the present invention, wherein the individual herd members are classified according to the feed efficiency (FE) and the milk production;

**FIG. 6** is a flowchart of functional steps in a method for classifying individual herd members according to illustrative embodiments of the present invention, wherein the individual herd members are classified according to the feed efficiency (FE) and the net income from milk production NIMP (or income over feed (IoF));

**FIG. 7** is a flowchart of functional steps in a method for classifying individual herd members according to illustrative embodiments of the present invention, wherein the individual herd members are classified according to the feed efficiency (FE), the milk production (MP), and the NIMP (or IoF);

**FIG. 8** is a flowchart of functional steps in a method for removing an individual herd member from a herd or group within the herd, according to illustrative embodiments of the present invention;

**FIG. 9** is a flowchart of functional steps in a method for classifying and removing an individual herd member from a herd or group within the herd, according to illustrative embodiments of the present invention;

**FIG. 10** is a block diagram depicting a computing device, which may be included within an embodiment of a system for classifying individual herd members and/or for removing individual herd members from a herd or a group within the herd, according to some embodiments of the invention.

## DETAILED DESCRIPTION

The principles, uses and implementations of the teachings herein may be better understood with reference to the accompanying description and figures. Upon perusal of the description and figures present herein, one skilled in the art will be able to implement the teachings herein without undue effort or experimentation. In the figures, same reference numerals refer to same parts throughout.

In the following description, various aspects of the invention will be described. For the purpose of explanation, specific details are set forth in order to provide a thorough understanding of the invention. However, it will also be apparent to one skilled in the art that the invention may be practiced without specific details being presented herein. Furthermore, well-known features may be omitted or simplified in order not to obscure the invention.

Unless specifically mentioned otherwise, or unless would have been understood otherwise by a person skilled in the art, the term "milk production (MP)" is defined to include any known measure of milk production, such as energy corrected milk (ECM), fat corrected milk (FCM), economically corrected milk, solids corrected milk, milk weight, milk volume or any combination thereof.

Unless specifically mentioned otherwise, or unless would have been understood otherwise by a person skilled in the art, the term "price of milk" may include any relevant monetary data parameters, such as the price of milk according to volume, price of milk according to weight, price of milk according to fat, and the like. Unless specifically mentioned otherwise, or unless would have been understood otherwise by a person skilled in the art, the terms "feed intake" and "dry matter intake", referred to also as DMI, are interchangeable herein and refer to the dry matter being consumed by a single member of the herd, or, when relevant, by the whole herd, certain groups within the herd, etc. It is noted that generally, unless mentioned or would have been understood otherwise, the feed referred to herein is dry matter.

Unless specifically mentioned otherwise, or unless would have been understood otherwise by a person skilled in the art, the term "energy corrected milk", referred to also as ECM, is a measurement of the amount of energy in the milk, specifically determining the amount of milk produced adjusted to 3.5% fat and 3.5% protein.

Unless specifically mentioned otherwise, or unless would have been understood otherwise by a person skilled in the art, the term "feed efficiency", or FE, refers to a proportion between the MP and the DMI of the herd, a group of herd members, and/or a single member of the herd, and may be calculated according to the following formula: MP/DMI. Accordingly, the higher the MP and the lower the DMI, the higher the FE value will be.

Unless specifically mentioned otherwise, or unless would have been understood otherwise by a person skilled in the art, any reference to individual herd members, or the like, refers to a group or herd that includes individual members, wherein the methods and systems described herein may, e.g., result in the classification of multiple herd members, each individual herd member is referred to separately, i.e., each individual herd member has its own DMI, MP, FE and the like. Thus, even if plural language is used herein, data is obtained and calculations are performed for each individual herd member separately. It is noted that while any of the data obtained and/or the calculations may include comparison between different herd members, the data/calculations themselves are unique for each individual herd member.

Unless specifically mentioned otherwise, or unless would have been understood otherwise by a person skilled in the art, the term "income over feed", referred to also as IoF, is defined as IoF = MP*(cost of milk)-DMI*(cost of feed), thereby providing the net income of the herd, based on the income from the milk produce, deducting the feed costs. Feed costs are not the only costs of herding, and therefore, unless specifically mentioned otherwise, or unless would have been understood otherwise by a person skilled in the art, the term "net income from milk production (NIMP)" is defined as NIMP = IoF-[additional cost parameters], thereby providing the real net income of the herd. The additional cost parameters include, but are not limited to, health expenses, such as vaccine expenses and antibiotics, waste removal costs, cost of room in the shed, milking costs, cost of equipment purchase and maintenance, employment costs, and the like.

Unless specifically mentioned otherwise, or unless would have been understood otherwise by a person skilled in the art, the term "metadata" refers to non-behavioral parameters related to the animal. For example, the metadata may include any one or more of the age of the animal, health status of the animal, profile of the animal, weight of the animal, the type of food being consumed by the animal and/or the animal group, the number of calves the animal has given birth to, how long it takes the animal to get pregnant, the group number of the animal group, or any combination thereof. According to some embodiments, the metadata may include environmental parameters. According to some embodiments, the health status of the animal may include any one or more of the pregnancy status of the animal, amount of milk produced by the animal, milk composition of the milk produced by the animal, number of days since last calving, milking status of the animal and reported injuries of the animal, or any combination thereof. Each possibility is a separate embodiment. According to some embodiments, the environmental parameters may refer to inputted and/or otherwise received data associated with the environment the individual herd member is in, such as, for example, the weather, season of the year, temperature, living conditions, and the like.

Herds referred to herein are herds of cattle, such as cows, goats and sheep. Any specific reference to cows may be interpreted to be relevant to any other type of herd animal, such as goats and sheep. Unless specifically mentioned otherwise, or unless would have been understood otherwise by a person skilled in the art, the terms "animal" and "individual herd member" are interchangeable.

Unless specifically mentioned otherwise, or unless would have been understood otherwise by a person skilled in the art, any elements described regarding a certain method or system may be relevant to other methods and systems as well.

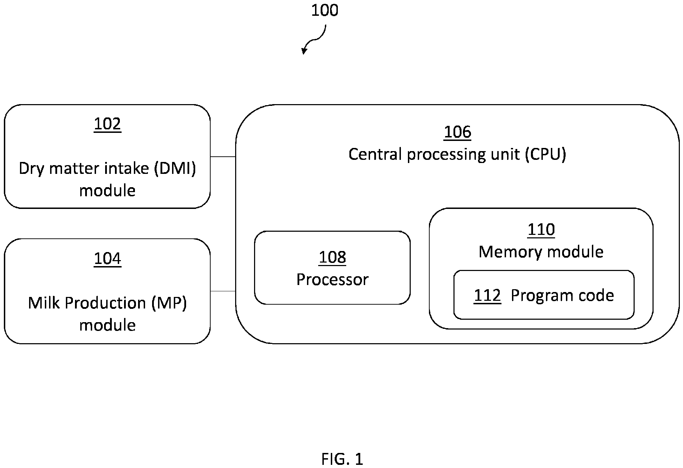

Reference is made to **FIG. 1**, which illustrates a system for classifying individual herd members, in accordance with some embodiments of the present invention.

According to some embodiments, system **100** may include a dry matter intake (DMI) module **102** and a milk production (MP) module **104**, both of which may be separately in communication with a central processing unit (CPU) **106.** According to some embodiments, not shown in the Figure, DMI module **102** and/or MP module **104** may be part of CPU **106.** According to some embodiments, the CPU includes a processor **108** and a memory module **110.** Processor **108** is in communication with memory module **110.** Further, stored on memory module **110** is a program code **112**, which is executable by processor **108** to obtain the DMI of the individual herd members based on data received from DMI module **102.** According to some embodiments, the data received from DMI module **102** is the DMI. According to other embodiments, the data received from DMI module **102** is DMI-related data, from which program code **112** is executable by processor **108** to obtain the DMI. Program code **112** is further executable by processor **108** to obtain the MP of the individual herd members based on data received from MP module **104.** According to some embodiments, the data received from MP module **104** is the MP. According to other embodiments, the data received from MP module **104** is MP MP -related data, from which program code **112** is executable by processor **108** to obtain the ECM. According to some embodiments, MP module **104** is a milk meter system, including one or more milk meters, used as part of the milking system of the herd or group within the herd. According to some embodiments, MP module **104** includes one or more milk tests, e.g., providing milk component data. According to some embodiments, MP module **104** includes a combination of one or more milk meters and one or more milk tests, e.g., providing milk component data.

According to some embodiments, the data received from DMI module **102** is the DMI of the individual herd members over a pre-defined period of time. According to other embodiments, the data received from DMI module **102** is data from which program code **112** is executable by processor **108** to obtain the DMI of the individual herd members over a pre-defined period of time. According to some embodiments, the data received from MP module **104** is the MP of the individual herd members over the predefined period of time. According to other embodiments, the data received from MP module **104** is data from which program code **112** is executable by processor **108** to obtain the MP of the individual herd members. It is noted that while not shown in the figure, any one of DMI module **102** and/or MP module **104** may further include a processor, a memory module, and/or a program code stored on the memory module and executable by the processor to, e.g., calculate the DMI or MP, which may in turn be obtained by program code **112**, as detailed herein.

Program code **112** is further executable by processor **108** to calculate the feed efficiency (FE) of the individual herd members over the pre-defined period of time, based on the DMI and MP of the individual herd members. In addition, program code **112** is executable by processor **108** to classify the individual herd members according to the FE.

It is noted that while the invention is described with a minimal or certain number of elements, e.g., one CPU, one processor, one memory module, one program code, etc., any number of such elements is considered to be included in the invention, provided that the system may obtain the DMI, obtain the MP, calculate the FE based on the DMI and MP and classify the individual herd members according to the FE. For example, a first CPU may be in communication with the DMI module and a second CPU may be in communication with the MP module, each CPU including its own processor, memory module, and program code, such that the first CPU obtains the DMI of the individual herd members from the DMI module while the second CPU obtains the MP of the individual herd members from the MP module. According to some embodiments, the first CPU and the second CPU are in communication with one another, and the FE is calculated by a program code stored on a memory module and enabled by a processor, either on the first CPU or the second CPU. According to other embodiments, the first CPU and the second CPU are in communication with a third CPU, having a processor and a memory module, which has stored thereon a program code enabled by the processor to calculate the FE based on the DMI obtained by the first CPU and the MP obtained by the second CPU. The individual herd members are then classified based on the FE, e.g., by the program code on the third CPU enabled by the processor on the third CPU to classify the individual herd members, or, for example, by a program code on a fourth CPU in communication with the third CPU, enabled by a processor on the fourth CPU. According to other embodiments, the system includes one CPU with multiple processors and/or memory modules and/or program codes, wherein for example, a first program code, stored on a first memory module, is enabled by a first processor to obtain the DMI, a second program code, stored on a second memory module, is enabled by a second processor to obtain the MP, a third program code stored on a third memory module is enabled by a third processor to calculate the FE, based on the DMI and MP, and a fourth program code, stored on a fourth memory module, is enabled by a fourth processor to classify the individual herd members according to the FE. As mentioned above, any such embodiments, including any number of elements, is included in the invention, even when details are provided for only a certain or minimal number of system elements.

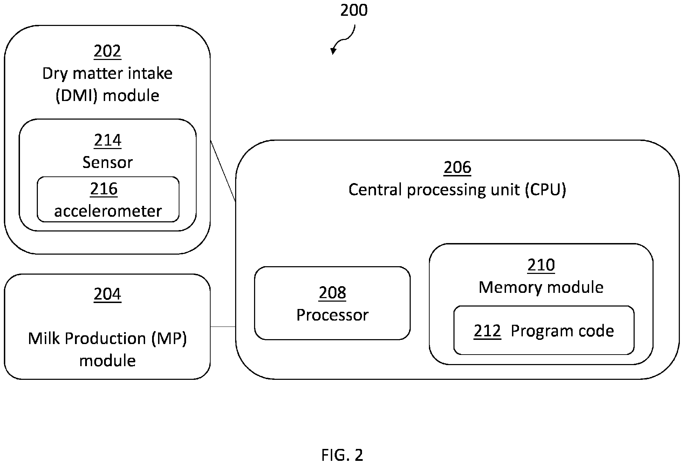

Reference is made to **FIG. 2**, which illustrates a system for classifying individual herd members, in accordance with some embodiments of the present invention, wherein the system includes a sensor comprising an accelerometer.

According to some embodiments, system **200** may include a dry matter intake (DMI) module **202** and a milk production (MP) module **204**, both of which are separately in communication with a central processing unit (CPU) **206.** While not necessarily repeated, it is noted that any embodiments of system **100** may be relevant to system **200** as well and/or to any other embodiments of the system of the invention are described herein.

According to some embodiments, DMI module **202** includes a sensor **214** comprising an accelerometer **216.** According to some embodiments, sensor **214** is positioned on, or in the vicinity, of the individual herd members, and is configured to collect data associated with at least one type of behavioral data of the individual herd members. Sensor **214** is further configured to transmit signals related to the data associated with at least one type of behavioral data. The signals may be transmitted to any other element within DMI module **202** (not shown) and/or to CPU **206** or any element of CPU **206**, e.g., memory module **210.**

While not shown in the Figures, it is noted that a sensor, such as sensor **214**, may be positioned on, or in the vicinity, of an individual herd member, such that each sensor, such as sensor **214**, collects data associated with at least one type of behavioral data of one individual herd member. In other words, the system may include a plurality of sensors, such as sensor **214**, each sensor dedicated to collecting at least one type of behavioral data from one individual herd member. Thus, the system may include N sensors, such as sensor **214**, configured to collect data associated with at least one type of behavioral data of N individual herd members, wherein each single sensor of the plurality of N sensors is dedicated to each single individual herd member of the N individual herd members. The DMI of the one individual herd members is then obtained based on the sensor dedicated to that individual herd member.

According to some embodiments, CPU **206** includes a processor **208** and a memory module **210.** Processor **208** is in communication with a memory module **210.** Further, stored on memory module **210** is a program code **212**, which is executable by processor **208** to obtain the DMI, or DMI-related data, of the individual herd members from DMI module **202** over a pre-defined period of time. According to the embodiments where DMI-related data is obtained from DMI module **202**, program code **212** may be further executable by processor **208** to obtain the DMI from the DMI-related data. Program code **212** may be further executable by processor **208** to obtain the MP, or MP - related data, of the individual herd members, from MP module **204** over the pre-defined period of time. According to the embodiments where MP -related data is obtained from MP module **204**, program code **212** may be further enabled by processor **208** to obtain the MP from the MP -related data.

Program code **212** is further executable by processor **208** to calculate the feed efficiency (FE) of the individual herd members over the pre-defined period of time, based on the DMI and MP of the individual herd members. In addition, program code **212** may be executable by processor **208** to classify the individual herd members according to the FE. As mentioned above, rather than having one program code, e.g., program code **212**, executable by one processor, e.g., processor **208**, to perform multiple tasks, including obtaining the DMI, obtaining the MP, calculating the FE and classifying the individual herd members, any number of program codes and/or processors may be included in the system, each intended to perform certain tasks, e.g., one program code may obtain the DMI and the MP, while a second program code may calculate the FE, and the like.

As described above, sensor **214** is configured to transmit signals related to the data associated with at least one type of behavioral data. According to some embodiments, program code **212** may be enabled by processor **208** to analyze the signals related to the data associated with at least one type of behavioral data in order to obtain the DMI of the individual herd members. It is noted in this respect that, while not shown in the Figure, DMI module **202** may further include a processor in communication with a memory model, having a program code embedded thereon, which is enabled by the DMI module processor to obtain the DMI of the individual herd members, which in turn may be communicated to any element within CPU **206**.

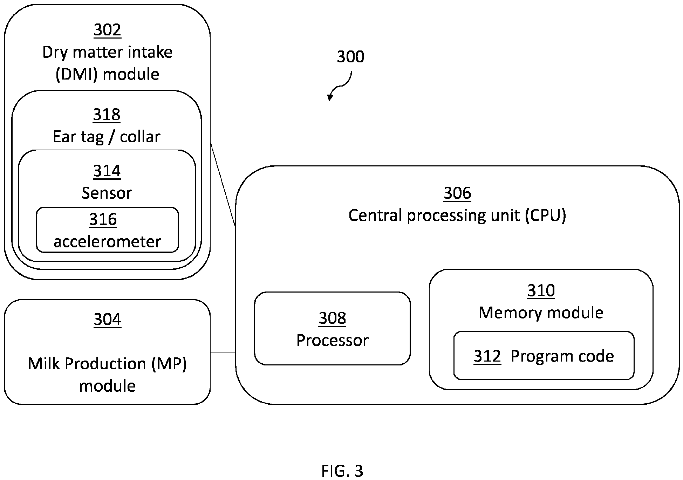

Reference is now made to **FIG. 3**, which illustrates a system for classifying individual herd members, in accordance with some embodiments of the present invention, wherein the system includes a collar or ear-tag comprising a sensor, and wherein the sensor comprises an accelerometer.

According to some embodiments, system **300** may include a dry matter intake (DMI) module **302** and a milk production (MP) module **304**, each of which may be separately in communication with a central processing unit (CPU) **306**. According to some embodiments, DMI module **302** includes a sensor **314** comprising an accelerometer **316**. According to some embodiments, sensor **314** is positioned in, or on, a collar or ear-tag **318**, and is configured to collect data associated with at least one type of behavioral data of the individual herd members. According to some embodiments, the at least one type of behavioral data includes head movements, and/or kinematics, of the individual herd members. Sensor **314** is further configured to transmit signals related to the data associated with at least one type of behavioral data, e.g., head movements and/or kinamatics. While not shown in the Figures, it is noted that a sensor, such as sensor **214** may be positioned in, or on, collar / ear-tag **318** associated with an individual herd member, such that each sensor, such as sensor **314**, collects data associated with at least one type of behavioral data, e.g., head movements and/or kinamtics, of a certain individual herd member. It is noted that this is the usual setup in milking farms, each individual herd member is equipped with a collar and/or ear tag, which is dedicated to providing data regarding the particular individual herd member it is placed on.

As known in the art, collar **318** is configured to be positioned around the neck of the individual herd members and ear tag **318** is configured to be positioned on the ear of the individual herd members. Embodiments of the invention include the use of a collar **318** and/or ear tag **318** and therefore, these different elements are referred to as interchangeable herein, such that element **318** may be either a collar or an ear tag. Any other device that may be positioned such that is maybe configured to collect behavioral data, such as head movements and/or kenametics, of the individual herd members is also included in the invention as element **318**.

According to some embodiments, CPU **306** includes a processor **308** and a memory module **310**. Processor **308** is in communication with memory module **310**. Further, stored on memory module **310** is a program code **312**, which is executable by processor **308** to obtain the DMI, or DMI-related data, of the individual herd members from DMI module **302** over a pre-defined period of time. According to the embodiments where DMI-related data is obtained from DMI module **302**, program code **312** may be further executable by processor **308** to obtain the DMI from the DMI-related data. Program code **312** may be further executable by processor **308** to obtain the MP, or MP - related data, of the individual herd members from MP module **304** over the pre-defined period of time. According to the embodiments where MP -related data is obtained from MP module **304**, program code **312** may be further enabled by processor **308** to obtain the MP from the MP -related data.

Program code **312** is further executable by processor **308** to calculate the feed efficiency (FE) of the individual herd members over the pre-defined period of time, based on the DMI and MP of the individual herd members. In addition, program code **312** may be executable by processor **308** to classify the individual herd members according to the FE. As mentioned above, the system of the invention, e.g., system **300**, may include multiple processors, program codes, and the like.

As described above, sensor **314**, which is positioned in (or on) collar/ear tag **318** is configured to transmit signals related to the data associated with at least one type of behavioral data, such as head movements and/or kinamatics of the individual herd member. According to some embodiments, sensor 314 is configured to continuously collect data associated with at least one type of behavioral data, such as head movements and/or kinamatics of the individual herd member. According to some embodiments, program code **312** may be enabled by processor **308** to analyze the signals related to the data associated with at least one type of behavioral data, e.g., head movements and/or kinametics, in order to obtain the DMI of the individual herd members. It is noted in this respect that, while not shown in the Figure, DMI module **302** may further include a processor in communication with a memory model, having a program code embedded thereon, which is enabled by the DMI module processor to obtain the DMI of the individual herd members, which in turn may be communicated to any element within CPU **306**.

According to some embodiments, sensor **314** may be configured such that the collected data and/or signals may have a resolution of at least one millisecond, at least five milliseconds, at least 10 milliseconds, at least 50 milliseconds, at least 100 milliseconds, or any range therebetween. Each possibility is a separate embodiment. It is noted that while certain embodiments are referred to relating to any elements, such as sensor **314**, they may be relevant to those embodiments as well, e.g., relevant to sensor **214** or any other sensors in the system. This is true for all elements, including CPUs, processors, program codes, etc.

As mentioned above, program codes **112**, **212** or **312** may be enabled by processors **108**, **208** or **308**, respectively, to obtain the DMI and MP over a pre-defined period of time, and to further calculate the FE over the same pre-defined period of time. According to further embodiments, program codes **112**, **212** or **312** may be enabled by processors **108**, **208** or **308**, respectively, and possibly coupled by memory modules **110**, **210** or **310** that are configured to accumulate the DMI and MP and to possibly further average the accumulated DMI and/or MP values over the pre-defined period of time and to calculate the FE based on the averaged DMI and MP values. Thus, according to some embodiments, program codes **112**, **212** or **312** are enabled by processors 108, 208 or 308, respectively, to classify the individual herd members based on averaged FE values.

As mentioned above, program codes **112**, **212** or **312** may be executable by processors 108, 208 or 308, respectively, to classify the individual herd members based on the FE. According to some embodiments, program codes **112**, **212** or **312** are further executable by processors **108**, **208** or **308**, respectively, to classify the individual herd members based on the MP. According to some embodiments, program codes **112**, **212** or **312** are further executable by processors **108**, **208** or **308**, respectively, to classify the individual herd members based on the net income from milk production (NIMP) (or the income over feed (IoF) or any combination thereof). As detailed herein, program codes **112**, **212** or **312** may be executable by processors **108**, **208** or **308**, respectively, to classify the individual herd members based on the FE and/or MP and/or NIMP (or IoF) in any appropriate sequence.

According to some embodiments, the NIMP (or IoF) is based on monetary data. The monetary data may be received, by any appropriate receiving element in CPU **106**, **206** or **306**, e.g., memory module **110**, **210** or **310**, or a receiver (not shown in the figures), from an external source, such as the internet, an external program, or the like.

Though not shown in the figures, according to some embodiments, the system may include a user interface module that is in communication with any one or more of CPU **106**, **206** and **306**, any one or more of the processors **108, 208** and **308**, sensor **214** and **314**, memory module **110**, **210** and **310,** DMI module **102, 202** and **302**, MP module **104**, **204** and **304**, or any other relevant element in the system.

According to some embodiments, the user interface module may be configured to receive data, such as associated with the individual herd members, from a user and/or other sensors detached from the collar / ear-tag **318**. According to some embodiments, the user interface module may include a keyboard, screen, mouse, button, microphone, and the like, or any combination thereof. According to some embodiments, the user interface module may include a smartphone application or software. According to some embodiments, the user interface module may be configured for inputting data associated with the individual herd members, the herd or a group within the herd, such as, e.g., metadata.

Although not shown in the figures, the system, e.g., system **100**, **200** or **300**, may include a receiver (not shown in the figures), e.g., for receiving signals from the sensor, e.g., sensor **214** or **314**, the DMI module, e.g., DMI module **102**, **202**, or **302**, or the MP module, e.g., MP module **104**, **204** or **304.** According to some embodiments, the receiver may receive monetary data for calculating the NIMP (or IoF). The monetary data may be received from an external source in communication with the system of the invention, e.g., system **100**, **200** or **300**.

According to some embodiments the receiver may be configured to receive the DMI or DMI-related data from the DMI module, e.g., DMI module **102**, **202** or **302**. According to some embodiments the receiver may be configured to receive the MP or MP -related data from the MP module, e.g., MP module **104**, **204** or **304.** The system may include a plurality for such receivers. According to some embodiments, the receiver may be in communication with any one or more of a sensor, DMI module, MP module, processor, memory module, program code, CPU, collar, ear tag or any other appropriate element in the system. According to some embodiments, the receiver may be configured to receive data associated with at least one behavior, e.g., head movements or kinametics, of a plurality of individual herd members, e.g., from a plurality of collars and/or ear-tags. According to some embodiments, the data from collars and ear-tags may be comparable, or in other words, data received from a collar or ear tag of one individual herd member may be compared with data received from a collar or ear tag of a different individual herd member. Further, data from a collar may be compared to data from an ear tag, whether received from the same individual herd member or not.

Although not shown in the figures, according to some embodiments, the system further includes a storage module. The storage module may be configured to store data, e.g., data or signals received from the sensor, the DMI module, the MP module, or the like. According to some embodiments, the storage module is in communication with the program code, which is enabled by the processor to access the data stored on the storage module at any appropriate time point, e.g., in order to perform any necessary calculations, e.g., calculations of FE, or in order to classify the individual herd members.

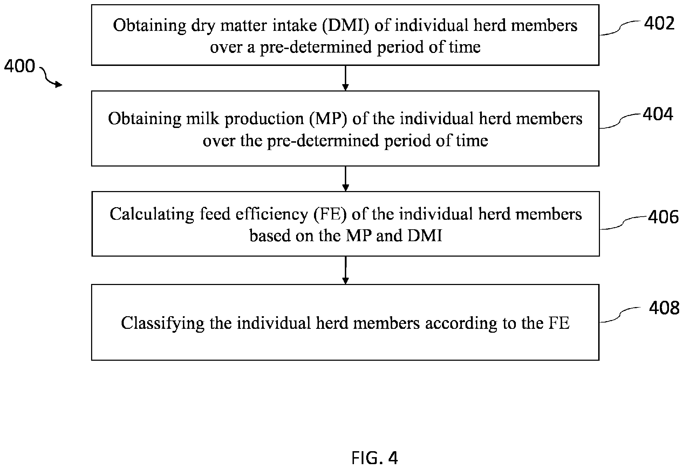

Reference is now made to **FIG. 4**, which shows a flowchart of functional steps in a method for classifying individual herd members, in accordance with some embodiments of the present invention. According to some embodiments, the one or more algorithms or program codes or executable codes, as detailed herein, may be executable by a processor to implement the method **400** as depicted in **FIG. 4.**

According to some embodiments, at step **402**, method **400** may include obtaining the dry matter intake (DMI) of individual herd members over a pre-determined period of time (for example, a first pre-determined period of time). According to some embodiments, method **400** may include obtaining the DMI over the pre-determined period of time at step **402** by a DMI module. According to some embodiments, method **400** may include obtaining DMI-related data over the predetermined period of time by a DMI module, and further processing the DMI-related data by a program code in order to obtain the DMI over the predetermined period of time at step **402** of method **400**.

According to some embodiments, at step **404**, method **400** may include obtaining the milk production (MP) of the individual herd members over the pre-determined period of time. According to some embodiments, method **400** may include obtaining the MP over the pre-determined period of time at step **404** by a DMI module. According to some embodiments, method **400** may include obtaining MP -related data over the predetermined period of time by a MP module, and further processing the MP -related data by a program code in order to obtain the MP over the predetermined period of time at step **404** of method **400.**

According to some embodiments, at step **406**, method **400** may include calculating the feed efficiency (FE) of the individual herd members, based on the MP and DMI over the predetermined period of time. As detailed herein, the FE may be calculated by a program code executable by a processor. According to some embodiments, at step **408**, method **400** may include classifying the individual herd members based on the FE.

According to some embodiments, the FE is calculated at step **406** according to FE= MP /DMI, wherein the MP and DMI are obtained in steps **402** and **404**, e.g., by way of a DMI module and an MP module.

It is noted in this respect that any appropriate steps in method **400** may be interchangeable. For example, steps **402** and **404** may be interchangeable, such that the MP is obtained prior to the DMI and vice versa.

According to some embodiments, the DMI of an individual herd member is obtained at step **402** based on at least one type of behavioral data of that individual herd member, e.g., head movements and/or kinametics of the individual herd member. According to some embodiments, the DMI of an individual herd member is obtained based on both behavioral data and non-behavioral data (metadata) of the individual herd member. According to some embodiments, the behavioral data is received from a sensor placed on the body, or in the vicinity, of an individual herd member. According to some embodiments, the sensor is placed on, or in the vicinity of, the head of the animal. According to some embodiments, the sensor is placed in (or on) a collar or ear-tag of the animal. According to some embodiments, the sensor includes an accelerometer. According to some embodiments, the sensor is configured to collect data associated with head movements of the individual herd member. According to some embodiments, the sensor is configured to collect data associated with the kinematics of the individual herd member. According to some embodiments, the sensor is configured to continuously collect data associated with the movements, e.g., head movements, kenametics, of the individual herd member.

According to some embodiments, the method may include saving data associated with each individual herd member in a database, storage system, CPU, computing device, or the like. According to some embodiments, the data may include signals received from the sensor, including e.g., at least one type of behavioral data of the individual herd member, such as head movements and/or kinametics, as well as any other data associated with the individual herd member, e.g., non-behavioral data, such as metadata.

According to some embodiments, the database may include a timeline, the timeline being composed of a plurality of time blocks. According to some embodiments, the time blocks may be organized in chronological order. According to some embodiments, each of the received signals is associated with a time block, and each time block may be saved in the database such that the data in the database consists of a continuous data stream associated with the movements (or kinematics) of the individual herd member.

According to some embodiments, the database, storage system, computing device, CPU, and the like, may include providing an accurate time stamp associated with each time block (or in other words, labeling the received signals with a time stamp, wherein each time stamp is configured to identify the time in which the time block has begun). According to some embodiments, the time stamp may be different than the time stamp received with the received signals, due to an accurate clock in the at least one sensor and/or the collar (and/or ear-tag). The clock in the least one sensor and/or the collar (and/or ear-tag) may be unreliable and/or inaccurate due to energy conservation methods. Thus, labeling the received signals with accurate time stamps avoids the need of having an accurate clock located in the collar (and/or ear-tag) and/or at least one sensor. Advantageously, having an accurate time stamp associated with the received signals enables the data received from the sensor to be compared to other individual herd member during the real time in which the data was received, thus enabling more accurate calculations of the FE. According to some embodiments, the method may include receiving a plurality of packets associated with a plurality of times blocks at once, and labeling the plurality of time blocks retroactively and accurately by reading their relative time (or the time associated with each packet in relation to the other packets received from the same collar (and/or ear-tag) or sensor).

According to some embodiments, the method may include converting the received signal to a representation in the frequency domain. According to some embodiments, the method may include applying one or more Fourier transform algorithms to the received signals. According to some embodiments, the method may include determining one or more frequencies within the received signals. According to some embodiments, the method may include determining one or more frequencies within the received signals for each time block. According to some embodiments, the method may include determining one or more frequencies within the received signals for each time block separately. According to some embodiments, the continuous data stream associated with movements of the individual herd member that is saved in the database may include the determined frequencies (as a function of time). According to some embodiments, the frequencies may range between 0.5 GHz and 4 GHz. According to some embodiments, the frequencies may range between 1 GHz and 3 GHz. According to some embodiments, the frequencies may range between 1 GHz and 2 GHz. According to some embodiments, the frequencies may range between 2 GHz and 3 GHz. Each possibility is a separate embodiment.

According to some embodiments, the method may include calculating an average frequency for each time block. According to some embodiments, the method may save, in the database, the average frequency of each time block separately. For example, for a time block of 1.5 minutes, the database will have saved therein the average frequency of every 1.5 minutes. According to some embodiments, the method may include calculating a variance for each time block. According to some embodiments, the method may include saving, in the database, the variance of each time block separately.

According to some embodiments, the method may include preprocessing the received signals by classifying different time blocks of the received signal into classes of types of behaviors of the individual herd members. According to some embodiments, the method may include preprocessing the determined frequencies of each time block. According to some embodiments, the preprocessing may include classifying each time block of the individual herd members into classes of behaviors of the individual herd members, e.g., eating, ruminating, walking, walking pace, activity (such as, for example, jumping), breathing rates, mealtime, or any combination thereof. According to some embodiments, the method may include classifying each time block of the individual herd members into classes of behaviors of the individual herd members by applying the frequency of each time block to one or more classification algorithms. According to some embodiments, the method may include classifying the time blocks based, at least in part, on the variance of the frequency of the signal within the time blocks.

According to some embodiments, the method may include applying a model that comprises one or more classifiers. According to some embodiments, the model may include one or more classifiers configured to classify the time blocks as any one or more classes of behaviors of the individual herd members. According to some embodiments, the model may include one or more classifiers configured to classify the time blocks based, at least in part, on the frequency of the signal within the time blocks, the variance of the frequency, one or more frequencies associated with other time blocks (that are not being classified), one or more previous classifications of one or more other time blocks, or any combination thereof. Each possibility is a separate embodiment. According to some embodiments, the model may include one or more Hidden Markov model (HMM). According to some embodiments, the model may include a classifier configured to use the HMM. According to some embodiments, the classifier may be configured to classify the time blocks based, at least in part, on received data from the at least one sensor. According to some embodiments, the classifier may be configured to classify the time blocks based, at least in part, on the extracted features.

According to some embodiments, the method may include classifying each time block of the individual herd members into classes of behaviors of the individual herd members by applying the variance of each time block to one or more classification algorithms. According to some embodiments, for a variance of the frequency of the signal that is above a predetermined threshold, the time block may be classified as eating time block. According to some embodiments, for a variance of the frequency of the signal that is below a predetermined threshold, the time block may be classified as ruminating time block. According to some embodiments, for a variance of the frequency of the signal that is below a predetermined threshold, the time block may be classified as meal-time time block, wherein the individual herd member does not necessarily eat throughout the meal-time time block, e.g., may rest between portions; however, the time block is considered one mealtime time block.

According to some embodiments, the classification algorithm may include one or more machine learning models. According to some embodiments, the classification algorithm may include any one or more of a logistic regression algorithm, Naive Bayers algorithm, k-nearest neighbors (k-NN) algorithm, decision tree algorithm, support vector machine (SVM) algorithm, hidden Markov models, boosting algorithm(s) (e.g., for example, adaptive boosting, gradient tree boosting, XGBoost, and the like), linear regression algorithm, decision tree algorithm, K-means algorithm, random forest algorithm, or any combination thereof. Each possibility is a separate embodiment.

According to some embodiments, the method may include clustering the time blocks of each individual herd member, wherein the clusters are associated with a classification of one or more behavior of the individual herd member. According to some embodiments, the method may include separating between clusters associated with rumination of the individual herd member and clusters associated with eating of the individual herd member or separating between clusters associated with mealtimes of the individual herd member with other clusters related to other types of behaviors of the individual herd member.

According to some embodiments, the method may include determining that a cluster in which the time blocks are classified as eating behavior, is an eating time block. According to some embodiments, the method may include clustering a plurality of eating time blocks into one or more mealtime block. According to some embodiments, the method may include identifying eating time blocks that are outside (or separate of) the mealtime block, or in other words, time blocks that may be outlier and regarded as non-eating times even though their frequency and/or variance may be similar to other eating time blocks of the individual herd member.

According to some embodiments, the mealtime block may include one or more time blocks that are not classified having eating behavior. For example, sometimes during a meal the individual herd member may have breaks between chewing the food. In situations in which there may be breaks between eating time blocks, the method may include identifying some of the time blocks within the meal as eating-breaks, if the meal is still taking place and the time block is not classified as an eating behavior.

According to some embodiments, the method may include extracting a plurality of features based, at least in part, on the classified time blocks. According to some embodiments, the method may include implementing feature construction and/or feature selection techniques. According to some embodiments, the method may include extracting a plurality of features from any one or more of the frequencies of the time blocks, the variance of the time blocks, the number of time blocks in a specific cluster associated with a specific behavior (or classification), the ratios between specific clusters, the metadate associated with the individual herd member, data associated with other individual herd members in the same group, herd, and/or shed, health status of the individual herd member, data associated with the milk production of the individual herd member, and/or any combination thereof. Each possibility is a separate embodiment. According to some embodiments, the features may be based on metadata associated with the individual herd member. According to some embodiments, the features may be based on the classified time blocks associated with the cow. According to some embodiments, the features may be based on a combination of metadata associated with the cow and the classified time blocks associated with the individual herd member.

According to some embodiments, the features may be extracted, selected and/or constructed using one or more algorithms, program codes, executable codes, as detailed herein, or the like. According to some embodiments, the method may include applying the time blocks and/or the metadata of the individual herd member to an algorithm or program code or executable code, executable by a processor to extract one or more features therefrom. According to some embodiments, the algorithm or code may include one or more machine learning models. According to some embodiments, the algorithm may be devoid of a machine learning model. According to some embodiments, the algorithm may include one or more models that are functions produced by one or more machine learning models.

According to some embodiments, the FE may be obtained by applying at least one algorithm to the one or more extracted features. According to some embodiments, the method may include applying, to the extracted features, one or more algorithms configured to obtain the FE. According to some embodiments, obtaining the FE may include calculating the amount of food the individual herd member has consumed. According to some embodiments, the algorithm may be configured to calculate the length of time the individual herd member has eaten and/or the eating pace (or chewing rate) and/or the length of mealtimes of the individual herd member. According to some embodiments, the algorithm may be configured to obtained the FE without calculating the rumination of the individual herd member.

According to some embodiments, obtaining the FE can be implemented by applying at least one algorithm to the one or more extracted features of the data in the mealtime block. According to some embodiments, the algorithm may be configured to identify the amount of food consumed by the individual herd member in one or more mealtime blocks. According to some embodiments, the method may include applying the algorithm to one or more mealtime blocks of the cow and the extracted features. It is noted that any reference to algorithms herein may be interchangeable with program codes or executable codes, or the like.

According to some embodiments, the algorithm may be configured to output the amount of food the individual herd member has consumed daily. According to some embodiments, the algorithm may be configured to output the amount of food the individual herd member has consumed on in a week (or every week). According to some embodiments, the algorithm may be configured to output the amount of food the individual herd member has consumed monthly.

Other than obtaining the DMI, according to step **402** of method **400**, as described above, step **404** of method **400** includes obtaining the MP of the individual herd members. According to some embodiments, the MP of the individual herd member may be obtained at step **404** by an MP module may be based on data received from a milk meter system, including one or more milk meters, used as part of the milking system of the herd or group of members within the herd.

As mentioned above, both the DMI and the MP are obtained over a pre-defined period of time. According to some embodiments, the DMI and MP obtained at steps **402** and **404** are averaged over the pre-defined period of time. Thus, according to some embodiments, the DMI and MP are obtained and accumulated over the predefined period of time, and the accumulated values are then divided by the number of days (or any other appropriate time unit according to which the DMI and/or MP values were obtained) in the pre-defined period of time, thereby providing average DMI and average MP values. According to this embodiment, the average DMI and average MP values are then used to calculate an average FE of the individual herd members, and individual herd members are classified according to the average FE values. Thus, according to some embodiments, the DMI is an average DMI. According to some embodiments, the MP is an average MP. According to some embodiments, the FE is an average FE.

The pre-defined period of time may include a pre-defined number of days between the day of calving or lactation, when milk production is initiated, and until the day on which the animal no longer produces milk. According to some embodiments, the predefined period of time is from the day of calving or lactation to about the peak of lactation. According to some embodiments, the pre-defined period of time is from a number of days after calving or lactation, to about a peak of lactation. According to some embodiments, the pre-defined period of time is from a number of days after calving or lactation, to a number of days before the first insemination of the herd or group within the herd, e.g., about 1, 2, 3, 4, 5, 6, 7, 8, 9, 10, 11, 12, 13, 14, 15, 16, 17, 18, 19 or 20 days before the first insemination of the herd or group within the herd. According to some embodiments, the pre-defined period of time is from a number of days after calving or lactation, to the end of a voluntary waiting period (VWP) as set, e.g., by a human user, e.g., farmer, wherein the VWP may end any number of days, e.g., about 1, 2, 3, 4, 5, 6, 7, 8, 9, 10, 11, 12, 13, 14, 15, 16, 17, 18, 19 or 20 days, before the first insemination, the second insemination, any further inseminations, mid lactation, or the like.

According to some embodiments, the peak of lactation is about 45, about 46, about 47, about 48, about 49, about 50, about 51, about 52, about 53, about 54, about 55, about 56, about 57, about 58, about 59, about 60, about 61, about 62, about 63, about 64, about 65, about 66, about 67, about 68, about 69, about 70, about 71, about 72, about 73, about 74, about 75, about 76, about 77, about 78, about 79, about 80 days from calving.

According to some embodiments, the pre-defined period of time is from about 5, about 6, about 7, about 8, about 9, about 10, about 11, about 12, about 13, about 14, about 15, about 16, about 17, about 18, about 19, about 20, about 21, about 22, about 23, about 24 or about 25 days from calving or lactation to about about 45, about 46, about 47, about 48, about 49, 50, about 51, about 52, about 53, about 54, about 55, about 56, about 57, about 58, about 59, about 60, about 61, about 62, about 63, about 64, about 65, about 66, about 67, about 68, about 69, about 70, about 71, about 72, about 73, about 74, about 75, about 76, about 77, about 78, about 79, about 80, about 81, about 82, about 83, about 84, about 85, about 86, about 87, about 88, about 89, about 90, about 91, about 92, about 93, about 94, about 95, about 96, about 97, about 98, about 99, about 100, about 110, about 120, about 130, about 140, about 150, about 160, about 170, about 180, about 190, about 200, about 210, about 220, about 230, about 240, about 250, about 260, about 270, about 280, about 290, or about 300 days from calving or lactation. According to some embodiments, the pre-defined period of time is from about 9, about 10, about 11 days from calving or lactation to about 55, about 56, about 57 days from calving or lactation. According to one embodiment, the pre-defined period of time is from about 21 days from calving to about 56 days from calving or lactation.

According to some embodiments, the DMI of a particular individual herd member may be obtained (or scored or ranked) in relation to the DMI of other individual herd members, e.g., in relation to all other individual herd members in the herd, in relation to other individual herd members within a particular group in the herd, for example, the group of herd members that the particular individual herd member belongs to within the herd, or with any other appropriate individual herd members. Particularly, an algorithm, e.g., included in the DMI module or in the CPU, may be configured to obtain (or rank or score or determine) the DMI of the particular individual herd member in relation to the DMI of other individual herd members, e.g., in relation to all other individual herd members, in relation to individual herd members within a particular group in the herd, for example, the group of herd members that the particular individual herd member belongs to within the herd.

According to some embodiments, an algorithm, e.g., included in the DMI module or the CPU, may be configured to obtain (or rank or score or determine) the DMI of the particular individual herd member in relation to the DMI of other individual herd members having at least one common metadata parameter, such as, for example, a same pregnancy status, health status, milk production data, and the like. For example, the DMI of a pregnant individual herd member may be obtained (or ranked or scored or determined) in relation to the DMI of other pregnant individual herd members in the herd or in a particular group in the herd, for example, a group of pregnant individual herd members.

It is noted that the herd may be divided into groups according, e.g., to at least one metadata parameter of the members, according to the physical placement of the members, e.g., the shed or pen or enclosure the animal is placed in, or the like. According to some embodiments, the physical placement of the animals is determined according to at least one metadata parameter, such that animals with at least one common metadata parameter are placed in the same group, which is physically separated, e.g., by a fence, from other groups of animals within the herd. The common metadata parameter used to differentiate between with groups may be determined by the user, as known in the art. Further, the metadata parameters may be ranked by importance, such that if a certain animal has metadata parameters common with more than one group, that animal will be placed in the group according to the metadata parameter with the highest rank.

According to some embodiments, the method may include receiving data associated with the total amount of food provided to the herd or to a group(s) of animals within the herd. According to some embodiments, the data associated with the total amount of food may include the weight of the food. According to some embodiments, the data associated with the total amount of food may include the type of the food. According to some embodiments, the data associated with the total amount of food may include the cost of the food. According to some embodiments, the data associated with the total amount of food may include the percent of dry matter within the feed. According to some embodiments, the algorithm, e.g., included in the DMI module or in the CPU, may be configured to obtain the DMI of an individual herd member based, at least in part, on the data associated with the total amount of food provided to the herd or group of animals within the herd to which the individual herd member belongs. It is noted that the total amount of food may change with time, and therefore, the data associated with the total amount of food may be updated every so often, e.g., when a significant change in the total amount of food occurs, or at pre-defined time intervals, e.g., once a day, once a week, once a month, or the like.

According to further embodiments, the method may further comprise receiving data associated with milk.

According to some embodiments, the data associated with milk includes the price of milk. It is noted that the price of milk may change with time, and therefore, the data associated with milk may be updated every so often, either when a significant change in price occurs, or at pre-defined time intervals, e.g., once a day, once a week, once a month, or the like.

As detailed above, the pre-defined period of time may be defined according to the number of days from calving or lactation. Accordingly, any number of days mentioned herein, whether from calving or from lactation, may be interchangeable with the other. It is noted that not all individual herd members, even if belonging to the same group, calve or begin to lactate on the same day. Accordingly, both the DMI (or average DMI) and the MP (or average MP) may be obtained for each individual herd member for the predefined period of time appropriate to that particular individual herd member, according to the day on which that particular individual herd member calved or lactated. Thus, the pre-defined period of time is defined according to the number of days from calving or lactating, such that the calendar dates of the pre-defined period of time may differ between the individual herd members. In other words, the DMI (or average DMI) and MP (or average MP) are essentially normalized, such that they are relevant, for each individual herd member, to the same days from calving or lactating of that particular individual herd member.

The DMI (or average DMI) and MP (or average MP), which is relevant to each individual herd member, according to the calving or lactating day of that particular individual herd member, may be stored in a storage module. According to some embodiments, when the individual herd members are to be classified according to the FE, the DMI (or average DMI) and MP (or average MP) data for each individual herd member may be compared to that of other individual herd members, the entire herd, or to a group of individual herd members within the herd, as mentioned above, and the classifying of the individual herd members is performed accordingly. Such a comparison between individual herd members is viable since the same days from calving or lactating are taken into consideration for each individual herm member, even if they calved or lactated at different times, e.g., on different days of the week, month, date, etc. This may be considered as "normalization" of the pre-defined period of time during which the DMI and MP are obtained, thereby providing normalized DMI and normalized MP. Accordingly, the FE for the individual herd members may be calculated according to normalized DMI and normalized MP. Further, the FE for the individual herd members may be calculated according to normalized and averaged DMI and normalized and averaged MP. As detailed herein, the average may be a daily average or any other appropriate average, according to the times on which the DMI and MP are obtained.

For example, if the pre-defined period of time is set to 10 days from calving to 56 days from calving, if Cow #1 calved on a certain day, the DMI and MP obtained for Cow #1 will begin 10 days later and continue to be obtained (and possibly accumulated and/or averaged) up to day 56 after the calving of Cow #1. Further, if Cow #2 calved 10 days after Cow #1, the DMI and MP obtained for Cow #2 will be from 10 days from Cow #2 calving, which is equivalent to 20 days after calving for Cow #1, and continue to be obtained (and possibly accumulated and/or averaged) up to day 56 from the calving of Cow #2, equivalent to 66 days of calving for Cow #1. The DMI and MP compared will be that of days 10-56 for Cow #1, according to the Cow #1 calving day, and days 10-56 for Cow #2, according to the Cow #2 calving day. Thus, even if the cows (or any other type of appropriate of individual herd members) did not calve the same day, the DMI and MP are obtained (and possibly accumulated and/or averaged) such that the same predefined days are compared for all cows, disregarding the exact calving date. Thus, according to some embodiments, the individual herd members may be classified at a time when the number of days from calving for each individual herd member may be different. The same example would be possible counting the days from first lactation rather than calving.

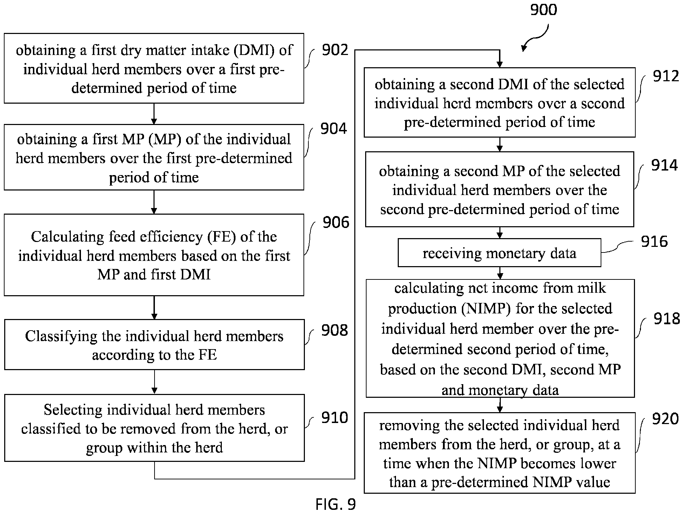

According to some embodiments, the system of the invention as described herein, includes a storage module or storage system, such as storage system **6** in **FIG. 9**, configured to store data for the individual herd members until substantially all relevant data is collected for the substantially the same pre-determined period of time for substantially all individuals herd members being classified, such that the comparison between the various individual herd members is properly "normalized", as described herein. According to some embodiments, the storage module or storage system is in communication with any of the system elements, e.g., elements of computing device **1** in **FIG. 9** or any one of CPU **106**, **206**, **306**, processor **108**, **208**, **308**, memory module **110**, **210**, **310**, DMI module **102**, **202**, 3**02**, MP module **104**, **204**, **304**, and the like. Further, according to some embodiments, program code **112**, **212** or **312** is enabled by processor **108**, **208** or **308**, respectively, to obtain the DMI and MP and to calculate the FE based on "normalized" data, such that the DMI and MP for each individual herd member are for the same pre-determined period of time, in comparison to the other individual herd members.

According to some embodiments, the classifying may be related to breeding.

Breeding classifications may classify (or divide or sort) the individual herd members into any number of categories relevant to breeding, wherein the individual herd members are classified into particular categories, based on their feed efficiency. According to some embodiments, there may be 2, 3, 4, 5, 6 or more breeding categories. According to some embodiments, there may be two breeding categories - "breed" and "do not breed". According to some embodiments, there may be three breeding categories - "do not breed", "breed by semen", "breed by embryo" (or "embryo transplant" or "embryo transfer"). According to some embodiments, there may be four breeding categories - "do not breed", "beef semen", "sexed semen" and "embryo transplant" (or "embryo transfer"). According to some embodiments, there may be five breeding categories - "do not breed", "beef semen", "conventional semen", "sexed semen - up to two services", "sexed semen - up to four services" and "embryo transplant" (or "embryo transfer"). According to some embodiments, there may be six breeding categories - "do not breed", "beef semen", "sexed semen - up to two services", "sexed semen - up to three services", "sexed semen - up to four services" and "embryo transplant" (or "embryo transfer"). According to some embodiments, there may be seven breeding categories - "do not breed", "beef semen", "conventional semen type", "sexed semen - up to two services", "sexed semen - up to three services", "sexed semen - up to four services" and "embryo transplant" (or "embryo transfer"). Any other number or definition of categories of breeding are further embodiments of the invention. The "do not breed" category may, for example, include about 5%-10% of the individual herd members in the herd, or group within the herd, that have the lowest FE values.

As detailed herein, the method of the invention includes classifying the individual herd members according to the FE of those individual herd members. According to some embodiments, the individual herd members may also be classified according to the MP. The classifying according to the MP may be before or after the classifying according to the FE. For example, regardless of whether the DMI has even been obtained yet, and/or whether the FE values have been calculated or considered yet, the method may include classifying the individual herd members according to the MP, such that individual herd members that have an MP value below a certain minimal MP value, will be removed from the herd or group within the herd, regardless of whether or not they have relatively high or even optimal feed efficiency.

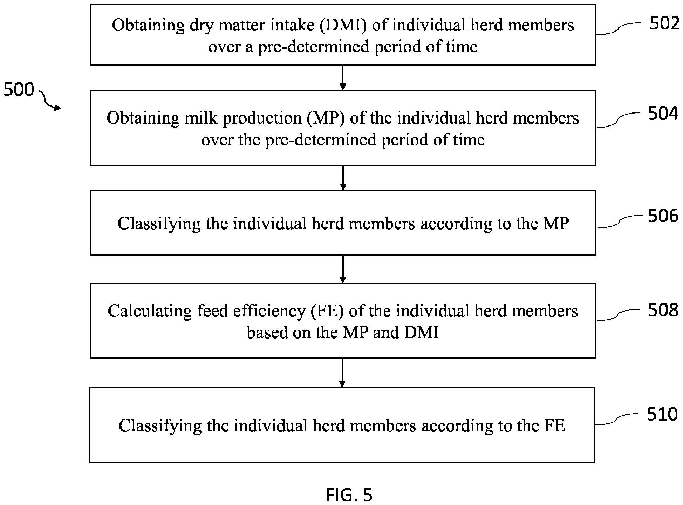

Reference is now made to **FIG. 5**, which shows a flowchart of functional steps in a method for classifying individual herd members, in accordance with some embodiments of the present invention. According to some embodiments, the one or more algorithms or program codes or executable codes, as detailed herein, may be executable by the processor to implement the method **500** as depicted in **FIG. 5.** According to the embodiments of method **500**, the individual herd members may be classified according to both the FE and the MP.

According to some embodiments, at step **502**, method **500** may include obtaining the dry matter intake (DMI) of individual herd members over a pre-determined period of time. According to some embodiments, at step **504**, method **500** may include obtaining the milk production (MP) of the individual herd members over the pre-determined period of time. According to some embodiments, at step **506**, method **500** may include classifying the individual herd members according to the MP. According to some embodiments, at step **508**, method **500** may include calculating the feed efficiency (FE) of the individual herd members based on the MP and DMI. According to some embodiments, at step **510**, method **500** may include classifying the individual herd members according to the FE.

According to some embodiments, the FE is calculated at step **508** according to FE= MP/DMI, wherein the DMI and MP are obtained in steps **502** and **504**, respectively.

It is noted in this respect that any appropriate steps in method **500** may be interchangeable. For example, steps **502** and **504** may be interchangeable, such that the MP is obtained prior to the DMI and vice versa. For example, once the DMI and MP are obtained (steps **502** and **504**), the individual herd members may be classified as in step **506** according to the MP, followed by calculating the FE, as in step **508** and classifying the individual herd members as in step **510**, or first, the FE may be calculated as in step **508**, followed by classifying the individual herd members by the FE, as in step **510** and only then classifying the individual herd members according to the MP, as in step **506.** Or, for example, once the DMI and MP are obtained (steps **502** and **504**), the FE may be calculated as in step **508**, followed by classifying the individual herd members by the MP, as in step **506**, followed by classifying the individual herd members by the FE, as in step **510.** Or, for example, once the MP is obtained, as in step **504**, the individual herd members may be classified according to the MP, as in step **506**, followed by obtaining the DMI, as in step **502**, calculating the FE, as in step **508**, and classifying the individual herd members according to the FE, as in step **510.** It is noted that once the individual herd members are classified according to the MP or the FE, any number of individual herd members may be removed from the herd, or a group within the herd, such that the method proceeds with obtaining, calculating and classifying with only the remaining individual herd members. Thus, according to some embodiments, the method of the invention further includes a step of removing individual herd members based on the classifying the individual herd members according to the MP, as in step **506** and/or according to the FE, as in step **510.**

According to additional embodiments, the method may further include a step of classifying the individual herd members based on the income over feed (IoF) of the individual herd members and/or the net income from milk production (NIMP). According to some embodiments, the IoF and NIMP are based on monetary data. The monetary data may be received from an external source, such as the internet, an external program, or the like. According to some embodiments, the IoF is calculated based at least on the price of milk and the cost of food, e.g., cost of dry matter feed. According to some embodiments, the NIMP is calculated based on the IoF, and taking into account additional cost parameters, as detailed herein. Generally it is noted that the IoF and NIMP are dependent on the income and the costs. The price of milk may also be referred to as milk related income.

According to some embodiments, the IoF is calculated according to the following formula:

$$\text{IoF} = \text{MP*(price of milk)} - \text{DMI*(cost of feed)}.$$

According to further embodiments, the system and method of the invention include calculating the NIMP, which includes additional cost parameters (or monetary data) on top of the IoF, such as health expenses, e.g., cost of vaccines and/or antibiotics and/or other medications, cost of room in the shed, waste removal expenses, milking costs, cost of labor, cost of equipment, and the like, such that the NIMP is calculated according to the following formula:

$$NIMP = IoF - [additional\ cost\ parameters].$$

The IoF and/or NIMP may be used, for example, to finetune the categories the individual herd members were classified (or sorted) into, e.g., by moving certain individual herd members from one category to another, or by setting the cutoff limit between the various categories.

According to some embodiments, the monetary data is received from an external source, such as the internet or an external program. According to some embodiments, the monetary data includes at least the cost of food (or dry matter feed) and the price of milk.

For simplicity, many of the embodiments detailed herein refer either to IoF or to the NIMP; however, it should be understood that any of those embodiments could implement either the IoF or the NIMP (or both when appropriate), even if only one is mentioned in detail.

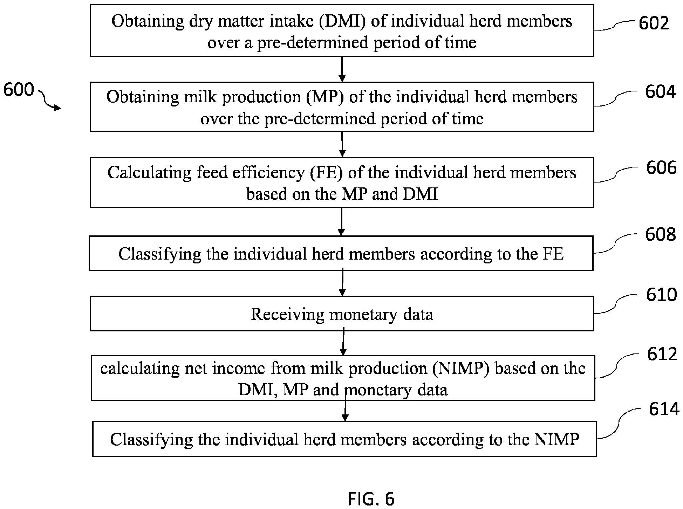

Reference is now made to **FIG. 6**, which shows a flowchart of functional steps in a method for classifying individual herd members, in accordance with some embodiments of the present invention. According to some embodiments, the one or more algorithms or program codes or executable codes, as detailed herein, may be executable by the processor to implement the method **600** as depicted in **FIG. 6**. According to the embodiments of method **600**, the individual herd members may be classified according to both the FE and the NIMP (or IoF - it is noted that while the figures refer only to NIMP, the NIMP could be replaced with IoF wherever appropriate, depending on the cost parameters taked into account).

According to some embodiments, at step **602**, method **600** may include obtaining the dry matter intake (DMI) of individual herd members over a pre-determined period of time. According to some embodiments, at step **604**, method **600** may include obtaining the milk production (MP) of the individual herd members over the pre-determined period of time. According to some embodiments, at step **606**, method **600** may include calculating the feed efficiency (FE) of the individual herd members based on the MP and DMI. According to some embodiments, at step **608**, method **600** may include classifying the individual herd members according to the FE. According to some embodiments, at step **610**, method **600** may include receiving monetary data, e.g., by a receiver or any other computing device or CPU element. According to some embodiments, the monetary data is received at step **610** from an external source. According to some embodiments, the monetary data includes at least the price of milk and the cost of food, e.g., dry matter feed. According to some embodiments, at step **612**, method **600** may include calculating the NIMP (or IoF) based on the DMI, MP and monetary data. According to some embodiments, at step **614**, method **600** may include classifying the individual herd animals according to the NIMP (or IoF).

It is noted in this respect that any steps may be interchangeable. For example, steps **602** and **604** may be interchangeable, such that the MP is obtained prior to the DMI and vice versa. For example, once the DMI and MP are obtained (steps **602** and **604**), the monetary data may be received as in step **610**, the NIMP (or IoF) calculated as in step **612**, the FE calculated as in step **606**, the individual herd members classified according to the FE as in step **608** and then classified according to the NIMP (or IoF) as in step **614.** For example, the order of the calculations of the NIMP (or IoF), as in step **612**, and the FE, as in step **606**, is interchangeable for example, the order of the classification according to the FE, as in step **608** and according to the NIMP (or IoF), as in step **614** is interchangeable, etc., as long as the necessary data for each calculation and each classification has been obtained, received, performed, etc. prior to the next relevant step.

Further, as noted above, any of the methods detailed herein, including method **600** may include a step of removing individual herd mammals from the herd or group within the herd following the classifying of the individual herd members, as in step **608** or **614**, wherein the removing of individual herd members is based on the classifying. For example, if the FE for an individual herd member is below a predetermined threshold the individual herd member is classified in a "remove from herd/group" classification, the individual herd member may be removed from the herd, or group within the herd, following the classification.

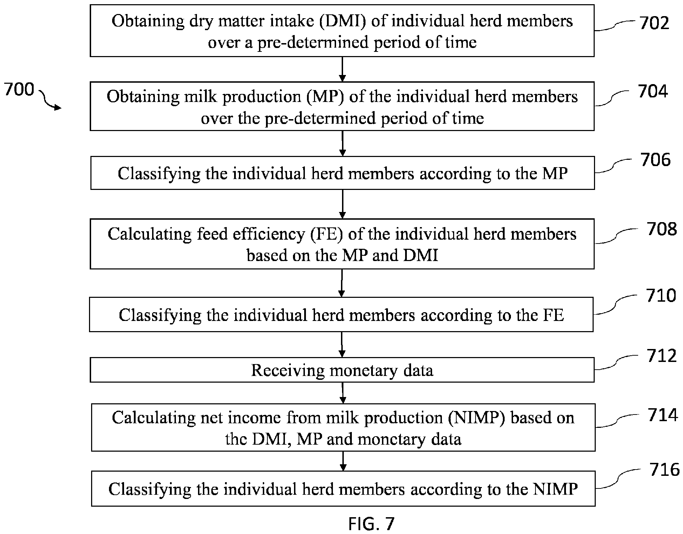

Reference is now made to **FIG. 7**, which shows a flowchart of functional steps in a method for classifying individual herd members, in accordance with some embodiments of the present invention. According to some embodiments, the one or more algorithms, program codes or executable codes, as detailed herein, may be executable by the processor to implement the method **700** as depicted in **FIG. 7**. According to the embodiments of method **700**, the individual herd members may be classified according to the FE, the MP and the NIMP (or IoF).

According to some embodiments, at step **702**, method **700** may include obtaining the dry matter intake (DMI) of individual herd members over a pre-determined period of time. According to some embodiments, at step **704**, method **700** may include obtaining the milk production (MP) of the individual herd members over the pre-determined period of time. According to some embodiments, at step **706**, method **700** may include classifying the individual herd members according to the MP. According to some embodiments, at step **708**, method **700** may include calculating the feed efficiency (FE) of the individual herd members based on the MP and DMI. According to some embodiments, at step **710**, method **700** may include classifying the individual herd members according to the FE. According to some embodiments, at step **712**, method **700** may include receiving monetary data. According to some embodiments, the monetary data is received at step **712** from an external source. According to some embodiments, the monetary data includes at least the price of milk and the cost of food, e.g., dry matter feed. According to some embodiments, at step **714**, method **700** may include calculating the NIMP (or IoF) based on the MP, DMI and monetary data. According to some embodiments, at step **716**, method **700** may include classifying the individual herd animals according to the NIMP (or IoF).

It is noted in this respect that any steps may be interchangeable. For example, steps **702** and **704** may be interchangeable, such that the MP is obtained prior to the DMI and vice versa. For example, once the DMI and MP are obtained (steps **702** and **704**), the monetary data may be received as in step **712**, the NIMP (or IoF) calculated as in step **714**, the FE calculated as in step **708**, the individual herd members classified according to the FE as in step **710** and then classified according to the NIMP (or IoF) as in step **714** and then according to the MP as in step **706**. For example, the order of the calculations of the NIMP (or IoF), as in step **714**, and the FE, as in step **708**, is interchangeable. For example, the order of the classification according to the FE, as in step **710**, according to the NIMP (or IoF), as in step **716,** and/or according to the MP, as in step **706**, is interchangeable, etc., as long as the necessary data for each calculation and each classification has been obtained, received, performed, etc., prior to the next relevant step.

As mentioned above, classifying the individual herd members may include classifying into a category of removing or culling certain animals (herd members) from the herd (or from any group within the herd). Once an individual herd member is classified (categorized) to be to be removed or culled, e.g., the individual herd member was classified into a "do not breed" category, or placed in a "sexed semen, up to two services", but failed to conceive after two services, and the like, it is may be useful to determine the time point on which the individual herd member will be removed from the herd and will no longer be milked. According to some embodiments, once an individual herd member is classified to be removed from the herd or group within the herd, it may be removed immediately after classification. According to other embodiments, a time point at which the individual herd member is to be removed from the herd, or group within the herd is determined, as detailed herein.

In this respect it is noted that while the classifying occurs at a first time point, the actions taken based on the classifying may occur at a different, e.g., a second, time point. For example, even if an individual herd member has been classified at a first time point into a "do not breed" category, the individual herd member may remain in the herd, or group, until a second time point, and continue to be milked. It is noted that such a removal process may also be referred to as culling. It is further noted that removal from the herd may also include removal from any group within the herd, such that the animal that is removed from the herd will no longer be milked.

It may be useful to keep the individual herd member in the herd as long as the income from the milk it produces is higher than the cost of keeping it, including at least the cost of feed, and possibly additional costs, such as the cost of room in the shed, necessary health related expenses, milking costs, waste removal expenses, and the like. Any appropriate income cutoff or margin may be set, such that the individual herd member is to be removed from the herd, or group of animals within the herd, at the time (referred to herein as the second time point) when the income from the individual herd member is lower than the set income cutoff or margin.

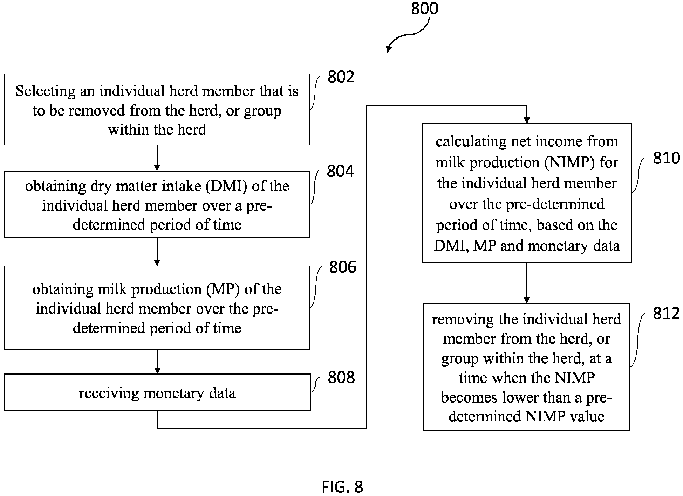

Reference is now made to **FIG. 8**, which shows a flowchart of functional steps in a method for timing the removal of individual herd members from a herd or from a group within the herd, in accordance with some embodiments of the present invention. According to some embodiments, the one or more algorithms, program codes or executable codes, as detailed herein, may be executable by the processor to implement the method **800** as depicted in **FIG. 8.**

According to some embodiments, at step **802**, method **800** may include selecting an individual herd member to be removed from a herd, or from a group within the herd. According to some embodiments, the individual herd member is selected at step **802** based on the classifying according to any of the methods described herein. For example, the individual herd member selected at step **802** may be an individual herd member classified as "do not breed" according to any of the method embodiments detailed here. For example, the individual herd member selected at step **802** may be an individual herd member classified as "sexed semen, two services" according to any of the method embodiments detailed here, wherein the individual herd member failed to conceive after both services. Thus, method **800** may be considered the continuation of any one of the classification methods **400**, **500**, **600** and/or **700**, as detailed herein and as depicted in **FIGS. 4, 5, 6** and **7**, respectively. Further, any of the systems of the invention, e.g., systems **100**, **200** and/or **300**, may be further configured to select an individual herd member to be removed from the herd, or group within the herd. For example, any one of program codes **112**, **212** and/or **312**, may be executable by processor **108**, **208** or **308**, respectively, to select an individual herd member, based on the classification, as detailed herein.

According to some embodiments, at step **804**, method **800** may include obtaining the dry matter intake (DMI) of individual herd member over a pre-determined period of time. According to some embodiments, at step **806**, method **800** may include obtaining the milk production (MP) of the individual herd member over the pre-determined period of time. According to some embodiments, at step **808**, method **800** may include receiving monetary data. According to some embodiments, the monetary data is received at step **808** from an external source. According to some embodiments, the external source is the internet, an external program, and the like. According to some embodiments, the monetary data includes at least milk-related income, such as the price of milk, as well as feed related costs, such as the cost of food, e.g., cost of dry matter feed. According to some embodiments, at step **810**, method **800** may include calculating the NIMP (or IoF) based on the DMI, MP and monetary data. According to some embodiments, at step **812**, method **800** may include removing the individual herd member from the herd at a time when the NIMP (or IoF) becomes lower than a pre-determined NIMP (or IoF) value. Further, any of the systems of the invention, e.g., systems **100**, **200** and/or **300**, may be further configured to receive monetary data, to calculate the NIMP (or IoF) of the individual herd member, and to indicate a time at which the individual herd member is to be removed from the herd, or group within the herd. For example, any one of program codes **112**, **212** and/or **312**, may be executable by processor **108, 208** or **308**, respectively, to receive monetary data, calculate the NIMP (or IoF) of the individual herd member and to further indicate a time at which the individual herd member should be removed from the herd, or group within the herd, as detailed herein.

According to some embodiments, the pre-determined NIMP (or IoF) value for determining the timing at which the individual herd member is removed from the herd is 0. It is noted that the NIMP (or IoF) value under which an individual herd member is removed from the herd, may be determined according to various considerations, such as whether there is a goal to enlarge the herd, or group of animals within the herd, e.g., the group to which the individual herd member belongs, whether the produce of the herd (or group of animals within the herd) has been optimized, whether it is possible to further enhance the properties, e.g., milk produce, of the herd (or group of animals within the herd) by replacing certain individual herd members with others, shortage in milk that requires enhancing production, milk payment system that favors production of milk with specific components, herd (or farm) quota, e.g., due to local regulations, and the like.

According to some embodiments, the pre-determined period of time according to method **800** or any other method for timing the removal of individual herd members from the herd, or group within the herd, is about one day, about two days, about three days, about four days, about five days, about six days, about a week, about eight days, about nine days, about ten days, about 11 days, about 12 days, about 13 days, about two weeks, about 15 days, about 16 days, about 17 days, about 18 days, about 19 days, about 20 days, about 3 weeks, or about any appropriate period of time. According to some embodiments, the pre-determined period of time is about 6 days, about one week, or about eight days. According to some embodiments, the pre-determined period of time is about one week. It is noted that the pre-determined period may start (and end) at any time during the life-cycle of the individual herd member, which was selected for removal from the herd, or group within the herd.

According to some embodiments, the DMI obtained over the pre-defined period of time, is an average. For example, the DMI obtained, may be the average weekly DMI. According to some embodiments, the MP obtained over the pre-defined period of time, is an average. For example, the MP obtained, may be the average weekly MP. Accordingly, the MP and DMI values used for the calculation of NIMP (or IoF) may be average values.

It is noted that the predetermined period of time set for the method for timing the removal of individual herd members from a herd, or group within the herd, e.g., method **800**, is not necessarily the same pre-determined period of time set for the method of classifying the individual herd members, e.g, method **400**, **500**, **600** or **700**. For example, the predetermined period of time set for the method for classifying the individual herd members, e.g, method **400**, **500**, **600** or **700**, may be from Day 10 to Day 56, counting from the day of calving, while the predetermined period of time set for timing the removal of individual herd member from a herd or group within the herd, e.g., method **500**, may be a week.

Reference is now made to **FIG. 9**, which shows a flowchart of functional steps in a method for classifying individual herd members in a herd, or a group of animals within the herd, and for further timing the removal of selected individual herd members from the herd, or group within the herd, in accordance with some embodiments of the present invention. According to some embodiments, the one or more algorithms, program codes or executable codes, as detailed herein, may be executable by the processor to implement the method **900** as depicted in **FIG. 9.**

According to some embodiments, at step **902**, method **900** may include obtaining a first dry matter intake (DMI) of individual herd members over a first pre-determined period of time. According to some embodiments, at step **904**, method **900** may include obtaining a first milk production (MP) of the individual herd members over the first predetermined period of time. According to some embodiments, at step **906**, method **900** may include calculating feed efficiency of the individual herd members, based on the DMI and MP, obtained in steps **902** and **904**, respectively. According to some embodiments, at step **908**, method **900** may include classifying the individual herd members according to the FE calculated at step **906.**

According to some embodiments, at step **910**, method **900** may include selecting individual herd members to be removed from the herd, or from a group of animals within the herd. According to some embodiments, the individual herd members are selected at step **910** based on the classifying according to step **908** or according to any of the methods described herein. For example, the individual herd members selected at step **910** may be individual herd members classified as "do not breed" according to any of the method embodiments detailed here. For example, the individual herd members selected at step **910** may be individual herd members classified as "sexed semen, two services" according to any of the method embodiments detailed here, wherein the individual herd members failed to conceive after both services. Further, while method **900**, as detailed in **FIG. 9,** refers only to classifying according to the FE, the invention further includes methods wherein the classifying is according to the FE, FE and MP, FE and NIMP (or IoF) and FE, MP and NIMP (or IoF), as detailed in methods **400**, 500, **600** and **700**, as detailed herein and as depicted in **FIGS. 4, 5, 6** and **7**, respectively.

According to some embodiments, at step **912**, method **900** may include obtaining a second dry matter intake (DMI) of the selected individual herd members over a second pre-determined period of time. According to some embodiments, at step **914**, method **900** may include obtaining a second milk production (MP) of the selected individual herd members over the second pre-determined period of time. According to some embodiments, at step **916**, method **900** may include receiving monetary data. According to some embodiments, the monetary data is received at step **916** from an external source. According to some embodiments, the external source is the internet, an external program, and the like. According to some embodiments, the monetary data includes at least milk-related income, such as the price of milk, as well as feed related costs, such as the cost of food, e.g., cost of dry matter feed. According to some embodiments, at step **918**, method **600** may include calculating the NIMP (or IoF) based on the second DMI, second MP and monetary data. According to some embodiments, at step **920**, method **900** may include removing the selected individual herd member from the herd at a time when the NIMP (or IoF) becomes lower than a pre-determined NIMP (or IoF) value.

According to some embodiments, the first pre-defined period of time may include a pre-defined number of days between the day of calving, when milk production is initiated, and until the day on which the animal no longer produces milk. According to some embodiments, the first pre-defined period of time is from the day of calving to about the peak of lactation. According to some embodiments, the first pre-defined period of time is from a number of days after calving, to about a peak of lactation.

According to some embodiments, the peak of lactation is about 50, about 51, about 52, about 53, about 54, about 55, about 56, about 57, about 58, about 59, about 60, about 61, about 62 days, about 63, about 64, about 65, about 66, about 67, about 68, about 69, about 70, about 71, about 72, about 73, about 74, about 75, about 76, about 77, about 78, about 79, about 80 days from calving.

According to some embodiments, the pre-defined period of time is from about 5, about 6, about 7, about 8, about 9, about 10, about 11, about 12, about 13, about 14, about 15, about 16, about 17, about 18, about 19, about 20, about 21, about 22, about 23, about 24 or about 25 days from calving or lactation to about about 45, about 46, about 47, about 48, about 49, 50, about 51, about 52, about 53, about 54, about 55, about 56, about 57, about 58, about 59, about 60, about 61, about 62, about 63, about 64, about 65, about 66, about 67, about 68, about 69, about 70, about 71, about 72, about 73, about 74, about 75, about 76, about 77, about 78, about 79, about 80, about 81, about 82, about 83, about 84, about 85, about 86, about 87, about 88, about 89, about 90, about 91, about 92, about 93, about 94, about 95, about 96, about 97, about 98, about 99, about 100, about 110, about 120, about 130, about 140, about 150, about 160, about 170, about 180, about 190, about 200, about 210, about 220, about 230, about 240, about 250, about 260, about 270, about 280, about 290, or about 300 days from calving or lactation. According to some embodiments, the pre-defined period of time is from about 9, about 10, about 11 days from calving to about 55, about 56, about 57 days from calving. According to one embodiment, the pre-defined period of time is from about 21 days from calving to about 56 days from calving or lactation.According to some embodiments, the second predetermined period of time is about one day, about two days, about three days, about four days, about five days, about six days, about a week, about eight days, about nine days, about ten days, about 11 days, about 12 days, about 13 days, about two weeks, about 15 days, about 16 days, about 17 days, about 18 days, about 19 days, about 20 days, about 3 weeks, or about any appropriate period of time. According to some embodiments, the second pre-determined period of time is about 6 days, about one week, or about eight days. According to some embodiments, the second pre-determined period of time is about one week.

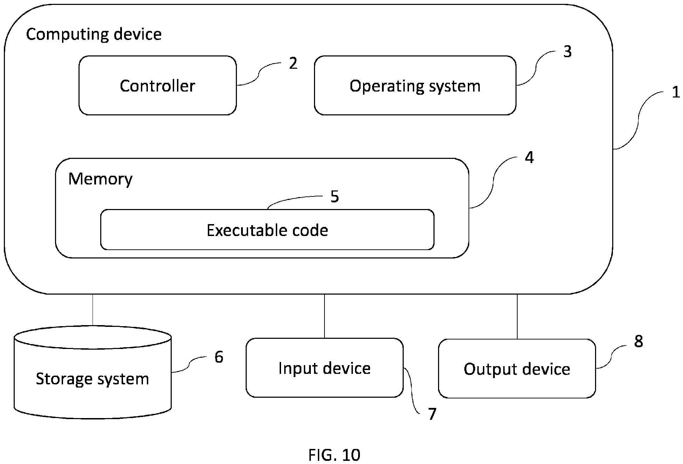

Reference is now made to **FIG. 10**, which is a block diagram depicting a computing device, which may be included within an embodiment of a system for classifying individual herd members, and/or for removing individual herd members from a herd and/or from a group within the herd, according to some embodiments of the invention. Computing device **1** may include a controller **2** that may be, for example, a central processing unit (CPU) processor, a chip or any suitable computing or computing device, an operating system **3**, a memory **4**, executable code **5**, a storage system **6**, input device(s) **7** and output device(s) **8.** Controller 2 (or one or more controllers or processors, possibly across multiple units or devices) may be configured to carry out methods described herein, and/or to execute or act as the various modules, e.g., a DMI module and/or an MP module, units, etc. More than one computing device **1** may be included in, and one or more computing devices **1** may act as the components of, a system according to embodiments of the invention. For example, a version of computing device **1** may be included system **100**, system **200**, or system **300**, as described in Figures 1, 2 and 3, respectively.

Operating system **3** may be or may include any code segment (e.g., one similar to executable code **5** or any one of program codes **112**, **212** and **312** described herein in Figures 1, 2 and 3, respectively) designed and/or configured to perform tasks involving coordination, scheduling, arbitration, supervising, controlling or otherwise managing operation of computing device **1**, for example, scheduling execution of software programs or tasks or enabling software programs or other modules or units to communicate. Operating system **3** may be a commercial operating system. It will be noted that an operating system **3** may be an optional component, e.g., in some embodiments, a system may include a computing device that does not require or include an operating system **3.**

Memory **4** may be or may include, for example, a Random- Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory **4** may be or may include a plurality of, possibly different memory units, e.g., memory modules **110**, **210** and/or **310**, described herein in Figures **1**, **2** and **3**, respectively). Memory **4** may be a computer or processor non-transitory readable medium, or a computer non- transitory storage medium, e.g., a RAM.

Executable code **5** may be any executable code, e.g., an application, a program, a process, task or script. Executable code **5** may be executed by controller **2** possibly under control of operating system **3**. Although, for the sake of clarity, a single item of executable code **5** is shown in **FIG. 10**, a system according to some embodiments of the invention may include a plurality of executable code segments similar to executable code **5** that may be loaded into memory **4** and cause controller **2** to carry out methods described herein.

Storage system **6** may be or may include, for example, a flash memory as known in the art, a memory that is internal to, or embedded in, a micro controller or chip as known in the art, a hard disk drive, a CD-Recordable (CD-R) drive, a Blu-ray disk (BD), a universal serial bus (USB) device or other suitable removable and/or fixed storage unit. Content may be stored in storage system **6** and may be loaded from storage system **6** into memory **4** where it may be processed by controller **2**. In some embodiments, some of the components shown in **FIG. 10** may be omitted. For example, memory **4** may be a non-volatile memory having the storage capacity of storage system **6**. Accordingly, although shown as a separate component, storage system **6** may be embedded or included in memory **4**.

Input device(s) **7** may be or may include any suitable input devices, components or systems, e.g., a detachable keyboard or keypad, a mouse and the like. Output device(s) **8** may include one or more (possibly detachable) displays or monitors, speakers and/or any other suitable output devices. Any applicable input/output (I/O) devices may be connected to computing device **1** as shown by blocks **7** and **8**. For example, a wired or wireless network interface card (NIC), a universal serial bus (USB) device or external hard drive may be included in input devices **7** and/or output devices **8**. It will be recognized that any suitable number of input devices **7** and output device **8** may be operatively connected to computing device **1** as shown by blocks **7** and **8**.

A system according to some embodiments of the invention may include components such as, but not limited to, a plurality of central processing units (CPU) or any other suitable multi-purpose or specific processors, controllers (e.g., controllers similar to controller **2**), microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units, and a plurality of storage units. A system may additionally include other suitable hardware components and/or software components. In some embodiments, a system may include or may be, for example, a personal computer, a desktop computer, a laptop computer, a workstation, a server computer, a network device, a smart phone, a tablet device or any other suitable computing device. Where applicable, modules or units described herein, may be similar to, or may include components of, device **1** described herein.

A system according to some embodiments of the invention may include a CPU, e.g., CPU **106**, **206** or **306**, as shown in **FIGS. 1**, **2** and **3**, respectively, which may include one or more computer processors **1**, such as processors **108**, **208** or **308**, as shown in **FIGS. 1**, **2** and **3**, respectively, each having computer readable storage media or a memory **4** having stored thereon instructions that, when executed by said one or more computer processors **1** , result in classifying individual herd members and/or removing individual herd members from a herd or group within the herd.

Embodiments of the invention are directed to a system comprising means for carrying out any of the methods, as detailed herein. Further embodiments of the invention are directed to a data processing system comprising means for carrying out the steps of and of the methods described herein.

In the above description, an embodiment is an example or implementation of the invention. The various appearances of "one embodiment", "an embodiment", "certain embodiments" or "some embodiments" do not necessarily all refer to the same embodiments. Although various features of the invention can be described in the context of a single embodiment, the features can also be provided separately or in any suitable combination. Conversely, although the invention can be described herein in the context of separate embodiments for clarity, the invention can also be implemented in a single embodiment. Certain embodiments of the invention may include features from different embodiments disclosed above, and certain embodiments can incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

In the description and claims of the application, the words "include" and "have", and forms thereof, are not limited to members in a list with which the words may be associated.

Unless otherwise defined, all technical and scientific terms used herein have the same meaning as commonly understood by one of ordinary skill in the art to which this disclosure pertains. In case of conflict, the patent specification, including definitions, governs. As used herein, the indefinite articles "a" and "an" mean "at least one" or "one or more" unless the context clearly dictates otherwise.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. No feature described in the context of an embodiment is to be considered an essential feature of that embodiment, unless explicitly specified as such.

Although stages of methods according to some embodiments may be described in a specific sequence, methods of the disclosure may include some or all of the described stages carried out in a different order. A method of the disclosure may include a few of the stages described or all of the stages described. No particular stage in a disclosed method is to be considered an essential stage of that method, unless explicitly specified as such.

Although the disclosure is described in conjunction with specific embodiments thereof, it is evident that numerous alternatives, modifications and variations that are apparent to those skilled in the art may exist. Accordingly, the disclosure embraces all such alternatives, modifications and variations that fall within the scope of the appended claims. It is to be understood that the disclosure is not necessarily limited in its application to the details of construction and the arrangement of the components and/or methods set forth herein. Other embodiments may be practiced, and an embodiment may be carried out in various ways.

The phraseology and terminology employed herein are for descriptive purpose and should not be regarded as limiting. Citation or identification of any reference in this application shall not be construed as an admission that such reference is available as prior art to the disclosure. Section headings are used herein to ease understanding of the specification and should not be construed as necessarily limiting.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer (or cloud) may be connected to the user's computer through any type of network, including a local area network (LAN) or a wide area network (WAN), or the connection may be made to an external computer (for example, through the Internet using an Internet Service Provider) including wired or wireless connection (such as, for example, Wi-Fi, BT, mobile, and the like). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A system for classifying an individual herd member, said system comprising:

   a dry matter intake (DMI) module configured to obtain the DMI or DMI-related data of the individual herd member, over a first pre-determined period of time;
   a milk production (MP) module, configured to obtain the MP or MP-related data of the individual herd member, over the first pre-determined period of time;
   a central processing unit (CPU) comprising a processor in communication with a memory module, the memory module having stored thereon a program code, the program code executable by the processor to:

   obtain the DMI from the DMI module, or obtain the DMI-related data from the DMI module and to further obtain the DMI from the DMI-related data, over the first pre-determined period of time;
   obtain the MP from the MP module, or obtain the MP-related data from the MP module and to further obtain the MP from the MP-related data, over the first pre-determined period of time;
   calculate the feed efficiency (FE) of the individual herd member over the first pre-determined period of time, based on the DMI, over the first predetermined time period, and the MP, over the pre-determined time period; and
   classify the individual herd member according to the FE.

2. The system according to claim 1, wherein if the individual herd member is classified to be removed from the herd, or group within the herd or group within the herd,

   the DMI module is further configured to obtain the DMI or DMI-related data of the individual herd member, over a second pre-determined period of time;
   the MP module is further configured to obtain the MP or MP-related data of the individual herd member, over the second pre-determined period of time; and
   the program code is further executable by the processor to:

obtain the DMI from the DMI module, or obtain the DMI-related data from the DMI module and to further obtain the DMI from the DMI-related data, over the second pre-determined period of time;
obtain the MP from the MP module, or obtain the MP-related data from the MP module and to further obtain the MP from the MP-related data, over the second pre-determined period of time;
receive monetary data;
calculate an NIMP or an IoF of the individual herd member, based on the monetary data, the DMI over the second pre-determined time period, and the MP over the second predetermined time period; and
indicate a time for removal of the individual herd member from the herd, or group within the herd, wherein the time indicated is a time at which the NIMP is lower than a pre-determined NIMP value or a time at which the IoF is lower than a pre-determined IoF value.

3. The system according to claim 1 or 2, wherein the DMI module comprises:

a sensor comprising an accelerometer,
wherein the sensor is positioned on, or in the vicinity, of the individual herd member; and
wherein the sensor is configured to collect at least one type of behavioral data of the individual herd member and is further configured to transmit signals related to the at least one type of behavioral data to the CPU.

4. The system according to claim 3, wherein the at least one type of behavioral data includes head movements, and wherein the sensor is positioned on, or in the vicinity, of a head of the individual herd member; optionally wherein the sensor is positioned in, or on, a collar or ear tag of the individual herd member.

5. The system according to any one of the previous claims, wherein the FE is calculated according to the following formula:

$$FE = MP/DMI.$$

6. The system according to any of the previous claims, wherein the program code is further executable by the processor to classify the individual herd member according to the MP.

7. The system according to any one of the previous claims, wherein the CPU is configured to receive monetary data, and wherein program code is further executable by the processor to classify the individual herd member according to a net income from milk production (NIMP) or an income over feed (IoF) of the individual herd member, wherein the NIMP or IoF is based on the monetary data, the DMI and the MP; optionally wherein the monetary data includes at least the price of milk and the cost of feed, and wherein the IoF is calculated according to the following formula:

$$IoF = MP*(price\ of\ milk) - DMI*(cost\ of\ feed)$$

and wherein the NIMP is calculated according to the following formula:

$$NIMP = IoF - [additional\ cost\ parameters].$$

8. The system according to any one of the previous claims, wherein the program code is further enabled by the processor to classify the individual herd member according to the NIMP or the IoF.

9. A method for classifying an individual herd member, said method comprising:

obtaining a dry matter intake (DMI) of the individual herd member over a first predetermined period of time;
obtaining a milk production (MP) of the individual herd member over the first predetermined period of time;
calculating the feed efficiency (FE) of the individual herd member over the first pre-determined period of time, based on the DMI, over the first pre-determined period of time, and the MP, over the first pre-determined period of time; and
classifying the individual herd member according to the FE.

10. The method according to claim 9, wherein, if the individual herd member is classified to be removed from the herd, or group within the herd, the method further comprises:

selecting the individual herd member to be removed from the herd, or group within the herd;
obtaining a dry matter intake (DMI) of the individual herd member over a second pre-determined period of time;
obtaining a milk production (MP) of the individual herd member over the second pre-determined period of time;
receiving monetary data;
calculating an NIMP or an IoF of the individual herd member, based on the monetary data, the DMI, over the second pre-determined period of time, and the MP over the second pre-determined period of time; and
removing the individual herd member from the herd, or group within the herd, at a time when the NIMP is lower than a pre-determined NIMP value or at a time when the IoF is lower than a pre-determined IoF value.

11. The method according to claim 9 or 10, wherein the DMI is obtained based on at least one type of behavioral data of the individual herd member that is collected by a sensor comprising an accelerometer, wherein the sensor is positioned on, or in the vicinity, of the individual herd member.

12. The method according to claim 11, wherein the at least one type of behavioral data includes head movements, and wherein the sensor is positioned on, or in the vicinity, of a head of the individual herd member; optionally wherein the sensor is positioned in, or on, a collar or ear tag of the individual herd member.

13. The method according to any one of claims 9 to 12, wherein the method further comprises classifying the individual herd member according to the MP over the predetermined period of time, wherein the classifying according to the MP is performed before, at the same time, or after classifying according to the FE.

14. The method according to any one of claims 9 to 13, wherein the method further comprises receiving monetary data; optionally wherein the monetary data includes at least the price of milk and the cost of feed, and

wherein the IoF is calculated according to the following formula:

$$IoF = MP*(price\ of\ milk) - DMI*(cost\ of\ feed);$$

and
wherein the NIMP is calculated according to the following formula:

$$NIMP = IoF - [additional\ cost\ parameters].$$

15. The method according to any one claims 9 to 14, wherein the method further comprises classifying the individual herd member according to the NIMP or the IoF, wherein the classifying according to the NIMP or the IoF is performed before, at the same time, or after classifying according to the FE and/or the MP, if the individual herd member is further classified according to the MP.

16. A method for timing the removal of at least one individual herd member from a herd, or group within the herd, said method comprising:

selecting at least one individual herd member that is to be removed from the herd, or the group within the herd;
obtaining a dry matter intake (DMI) of the individual herd member over a predetermined period of time;
obtaining a milk production (MP) of the individual herd member over the predetermined period of time;
receiving monetary data;
calculating the net income from milk production (NIMP) or the income over feed (IoF) for the individual herd member over the pre-determined period of time, based on the DMI, MP, and the monetary data; and
removing the individual herd member from the herd, or group within the herd, at a time when the NIMP becomes lower than a pre-determined NIMP value or at a time when the IoF becomes lower than a pre-determined IoF value.

100

102

Dry matter intake (DMI)
module

104

Milk Production (MP)
module

106
Central processing unit (CPU)

108
Processor

110
Memory module

112  Program code

FIG. 1

200

202
Dry matter intake
(DMI) module

214
Sensor

216
accelerometer

206
Central processing unit (CPU)

204

Milk Production (MP)
module

208
Processor

210
Memory module

212  Program code

FIG. 2

302
Dry matter intake
(DMI) module

318
Ear tag / collar

314
Sensor

316
accelerometer

300

306
Central processing unit (CPU)

304

Milk Production (MP)
module

308
Processor

310
Memory module

312  Program code

FIG. 3

400

| Obtaining dry matter intake (DMI) of individual herd members over a pre-determined period of time | 402 |

| Obtaining milk production (MP) of the individual herd members over the pre-determined period of time | 404 |

| Calculating feed efficiency (FE) of the individual herd members based on the MP and DMI | 406 |

| Classifying the individual herd members according to the FE | 408 |

FIG. 4

```
┌─────────────────────────────────────────────────────────┐
│   Obtaining dry matter intake (DMI) of individual herd   │        502
│         members over a pre-determined period of time     │
└─────────────────────────────────────────────────────────┘
                              │
500 ↘                         ▼
┌─────────────────────────────────────────────────────────┐
│   Obtaining milk production (MP) of the individual herd  │        504
│        members over the pre-determined period of time    │
└─────────────────────────────────────────────────────────┘
                              │
                              ▼
┌─────────────────────────────────────────────────────────┐
│  Classifying the individual herd members according to    │        506
│                        the MP                            │
└─────────────────────────────────────────────────────────┘
                              │
                              ▼
┌─────────────────────────────────────────────────────────┐
│  Calculating feed efficiency (FE) of the individual herd │        508
│            members based on the MP and DMI               │
└─────────────────────────────────────────────────────────┘
                              │
                              ▼
┌─────────────────────────────────────────────────────────┐
│  Classifying the individual herd members according to    │        510
│                        the FE                            │
└─────────────────────────────────────────────────────────┘
```

FIG. 5

| Obtaining dry matter intake (DMI) of individual herd members over a pre-determined period of time | ⌐ 602 |

**600**

| Obtaining milk production (MP) of the individual herd members over the pre-determined period of time | ⌐ 604 |

| Calculating feed efficiency (FE) of the individual herd members based on the MP and DMI | ⌐ 606 |

| Classifying the individual herd members according to the FE | ⌐ 608 |

| Receiving monetary data | ⌐ 610 |

| calculating net income from milk production (NIMP) based on the DMI, MP and monetary data | ⌐ 612 |

| Classifying the individual herd members according to the NIMP | ⌐ 614 |

FIG. 6

700 ↘

| Obtaining dry matter intake (DMI) of individual herd members over a pre-determined period of time | ⟋702 |

↓

| Obtaining milk production (MP) of the individual herd members over the pre-determined period of time | ⟋704 |

↓

| Classifying the individual herd members according to the MP | ⟋706 |

↓

| Calculating feed efficiency (FE) of the individual herd members based on the MP and DMI | ⟋708 |

↓

| Classifying the individual herd members according to the FE | ⟋710 |

↓

| Receiving monetary data | ⟋712 |

↓

| Calculating net income from milk production (NIMP) based on the DMI, MP and monetary data | ⟋714 |

↓

| Classifying the individual herd members according to the NIMP | ⟋716 |

FIG. 7

800

Selecting an individual herd member that is to be removed from the herd, or group within the herd `802`

obtaining dry matter intake (DMI) of the individual herd member over a pre-determined period of time `804`

obtaining milk production (MP) of the individual herd member over the pre-determined period of time `806`

receiving monetary data `808`

calculating net income from milk production (NIMP) for the individual herd member over the pre-determined period of time, based on the DMI, MP and monetary data `810`

removing the individual herd member from the herd, or group within the herd, at a time when the NIMP becomes lower than a pre-determined NIMP value `812`

FIG. 8

900

obtaining a first dry matter intake (DMI) of individual herd members over a first pre-determined period of time / 902

obtaining a first MP (MP) of the individual herd members over the first pre-determined period of time / 904

Calculating feed efficiency (FE) of the individual herd members based on the first MP and first DMI / 906

Classifying the individual herd members according to the FE / 908

Selecting individual herd members classified to be removed from the herd, or group within the herd / 910

obtaining a second DMI of the selected individual herd members over a second pre-determined period of time / 912

obtaining a second MP of the selected individual herd members over the second pre-determined period of time / 914

receiving monetary data / 916

calculating net income from milk production (NIMP) for the selected individual herd member over the pre-determined second period of time, based on the second DMI, second MP and monetary data / 918

removing the selected individual herd members from the herd, or group, at a time when the NIMP becomes lower than a pre-determined NIMP value / 920

FIG. 9

FIG. 10

Europäisches
Patentamt

European
Patent Office

Office européen
des brevets

# EUROPEAN SEARCH REPORT

**Application Number**

EP 24 19 0398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/305388 A1 (HALACHMI ILAN [IL] ET AL) 1 October 2020 (2020-10-01) | 1,2, 5-10, 13-16 | INV. A01K5/00 A01K29/00 |
| Y | * the whole document * | 3,4,11, 12 | A01K5/02 |
| | ----- | | |
| Y | US 11 116 182 B2 (COMMW SCIENT IND RES ORG [AU] ET AL.) 14 September 2021 (2021-09-14) * the whole document * | 3,4,11, 12 | |
| | ----- | | |

**TECHNICAL FIELDS SEARCHED (IPC)**

A01K

The present search report has been drawn up for all claims

| Place of search | Date of completion of the search | Examiner |
|---|---|---|
| The Hague | 19 December 2024 | Postma, Rob |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 0398

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | Publication date | Patent family member(s) | Publication date |
|---|---|---|---|
| US 2020305388 A1 | 01-10-2020 | CN 111587069 A | 25-08-2020 |
| | | EP 3713400 A1 | 30-09-2020 |
| | | IL 274850 A | 30-07-2020 |
| | | US 2020305388 A1 | 01-10-2020 |
| | | US 2024381838 A1 | 21-11-2024 |
| | | WO 2019102471 A1 | 31-05-2019 |
| US 11116182 B2 | 14-09-2021 | AU 2017276810 A1 | 24-01-2019 |
| | | BR 112018075539 A2 | 09-04-2019 |
| | | CA 3026605 A1 | 14-12-2017 |
| | | CN 109640640 A | 16-04-2019 |
| | | EP 3468354 A1 | 17-04-2019 |
| | | NZ 749318 A | 31-03-2023 |
| | | US 2019141959 A1 | 16-05-2019 |
| | | WO 2017210740 A1 | 14-12-2017 |

EPO FORM P0459

For more details about this annex : see Official Journal of the European Patent Office, No. 12/82